# EUROPÄISCHE PATENTSCHRIFT

(11) **EP 2 678 399 B1**
(45) Veröffentlichungstag und Bekanntmachung des Hinweises auf die Patenterteilung: **13.07.2016**
(21) Anmeldenummer: 12705088.8
(22) Anmeldetag: 09.02.2012
(51) Int. Cl.: C09K 3/14, C01B 33/12, C09G 1/02, C01B 33/148, C01B 33/193, C01B 33/143

(54) **VERFAHREN ZUR HERSTELLUNG WÄSSRIGER KOLLOIDALER SILIKASOLE HOHER REINHEIT AUS ALKALIMETALLSILIKATLÖSUNGEN**
PROCESS FOR PREPARING AQUEOUS COLLOIDAL SILICA SOLS OF HIGH PURITY FROM ALKALI METAL SILICATE SOLUTIONS
PROCÉDÉ DE PRODUCTION DE SOLS SILICEUX COLLOÏDAUX AQUEUX TRÈS PURS À PARTIR DE SOLUTIONS DE SILICATES DE MÉTAUX ALCALINS

(30) Priorität: 22.02.2011 DE 102011004534; 29.04.2011 DE 102011017783
(43) Veröffentlichungstag der Anmeldung: 01.01.2014
(73) Patentinhaber: Evonik Degussa GmbH, 45128 Essen (DE)
(72) Erfinder: FUHRMANN, Claudia, 53340 Meckenheim (DE); OEHM, Dieter, 53604 Bad Honnef (DE); PANZ, Christian, 50389 Wesseling-Berzdorf (DE); PAULAT, Florian, 25709 Marne (DE); SCHÜTTE, Rüdiger, 63755 Alzenau-Hörstein (DE); RAULEDER, Hartwig, 79618 Rheinfelden (DE); MARKOWZ, Georg, 63755 Alzenau (DE); LANG, Jürgen Erwin, 76229 Karlsruhe (DE); FRINGS, Bodo, 33758 Schloss Holte (DE)
(86) Internationale Anmeldenummer: PCT/EP2012/052199
(87) Internationale Veröffentlichungsnummer: WO 2012/113650

(56) Entgegenhaltungen:
- EP-A1- 0 571 317
- WO-A1-03/078321
- WO-A1-2009/155714
- WO-A1-2010/037702
- WO-A1-2010/037705
- US-A- 3 884 835
- DATABASE WPI Week 200564 Thomson Scientific, London, GB; AN 2005-622209 XP002675656, & JP 3 691047 B1 (NIPPON CHEM IND CO LTD) 31. August 2005 (2005-08-31) in der Anmeldung erwähnt & JP 2006 036612 A (NIPPON CHEMICAL IND) 9. Februar 2006 (2006-02-09) in der Anmeldung erwähnt
- DATABASE WPI Week 200403 Thomson Scientific, London, GB; AN 2004-025646 XP002675657, -& JP 2003 089786 A (NIPPON CHEM IND CO LTD) 28. März 2003 (2003-03-28) in der Anmeldung erwähnt
- YVON LE PAGE AND GABRIELLE DONNAY: "Refinement of the Crystal Structure of Low-Quartz", ACTA CRYST., Bd. B32, Nr. 8, 31. August 1976 (1976-08-31), Seiten 2456-2459, XP002675611, DOI: doi:10.1107/S0567740876007966
- MAURICE HUGGINS: "The Crystal Structure of Quartz", PHYSICAL REVIEW, Bd. 19, Nr. 4, 1. April 1922 (1922-04-01), Seiten 363-368, XP55038426, ISSN: 0031-899X, DOI: 10.1103/PhysRev.19.363

## Beschreibung

Die vorliegende Erfindung betrifft ein Verfahren zur Herstellung wässriger kolloidaler Silikasole hoher Reinheit aus Silikatlösungen.

Kolloidale Silikasole werden industriell hauptsächlich aus Wasserglas, welches einen preiswerten Rohstoff darstellt, gewonnen. Wasserglas wird üblicherweise durch Zusammenschmelzen von Quarzsand mit Soda oder Pottasche bei Temperaturen um 1200°C und anschließendem Lösen des abgeschreckten Alkalimetallsilikats in Wasser unter Druck und erhöhter Temperatur erhalten.

Im üblichen Verfahren zur Herstellung kolloidaler Silikasole ausgehend von Wasserglas wird dieses zunächst mit einem sauren Kationenaustauscher vom Wasserstofftyp behandelt (vgl. z.B. "Colloidal Silica - Fundamentals and Applications", Editoren: H. E. Bergma, W. O. Roberts, CRC Press, 2006, ISBN: 0-8247-0967-5). Die erhaltene Kieselsäure, die einen pH-Wert von 2-4 aufweist, wird anschließend durch Alkalisieren bei einem pH-Wert von 8-10 stabilisiert und zur Partikelbildung auf Temperaturen im Bereich von 80-100°C erhitzt. Durch geeignete Wahl der Prozessparameter können mittlere Partikelgrößen im Bereich von 5 nm bis etwa 200 nm eingestellt und die Partikelgrößenverteilung gesteuert werden.

Bedingt durch den geringen Reinheitsgrad der Ausgangsstoffe enthalten die nach diesem Verfahren hergestellten kolloidalen Silikasole jedoch Verunreinigungen, insbesondere in Form von Alkali- und Erdalkalimetallen wie Na, K, Mg und Ca sowie von Übergangsmetallen wie Al, Fe, Cr, Ni, Cu und Zr in Konzentrationen bis zu 1000 ppm, wobei die Metalle elementar, ionisch und/oder als Verbindungen, in der Folge zusammengefasst unter der Bezeichnung "metallbasierte Verunreinigungen (an Metall x)", vorliegen können. Gehaltsangaben metallbasierter Verunreinigungen beziehen sich hierbei, soweit nichts anderes bestimmt ist, auf den Gehalt eines Metalls/einer Gruppe von Metallen unter Berücksichtigung des Vorliegens in elementarer und ionischer Form sowie in Form von Verbindungen im gegebenenfalls gelöstem oder dispergiertem SiO₂-basierten Festkörper, ausgedrückt in Gewichtsanteilen (ppm) des betreffenden metallischen Elements bzw. der betreffenden metallischen Elemente. Bestimmte Anwendungen insbesondere als Abrasivum in chemisch-mechanischen Polierverfahren (CMP), die in der Halbleiter- und Elektronikindustrie zum Polieren von Scheiben aus hochreinem Silizium (Wavern), Halbleitermaterialien und -bauteilen, magnetischen Speichermedien und Kristallsubstraten eingesetzt werden, erfordern hingegen hochreine kolloidale Silikasole welche im wesentlichen frei von oben genannten Verunreinigungen sind.

Beim chemisch-mechanischen Poliervorgang erfolgt der Materialabtrag durch ein Zusammenwirken eines chemischen Ätzvorgangs der Poliermittelformulierung und einem mechanischen Abtrag der Oberfläche durch die kolloidalen Partikel. Metallbasierte Verunreinigungen des als Abrasivum verwendeten kolloidalen Silikasols führen hierbei zu unerwünschten, störenden Effekten, die die Qualität und Funktionalität des behandelten Halbleitermaterials/-erzeugnisses drastisch beeinträchtigen können. So ist z. B. bekannt, dass Na⁺- und K⁺-Ionen über eine hohe Mobilität in Halbleitermaterialien verfügen und somit bei Kontakt der Poliermittelformulierung mit der Halbleiteroberfläche tief in das Halbleitermaterial diffundieren können, wodurch sich die elektronischen Materialeigenschaften verändern. Cu-basierte Verunreinigungen weisen andererseits beispielsweise die ausgeprägte Eigenschaft zur Anreicherung an der behandelten Halbleiteroberfläche auf, wodurch elektrische Kurzschlusspfade ausgebildet werden können. Höherwertige Metallverunreinigungen wie z.B. Al, Fe oder Zr können beim Polieren zu einer vermehrten Kratzerbildung führen. Die Hintergründe sind bisher noch nicht eindeutig geklärt, es kann jedoch z.B. durch diese Verunreinigungen zur Bildung von größeren Partikeln (Agglomeration bzw. Aggregation) kommen, die dann entsprechend zu einer Kratzerbildung führen.

Verfahren zur Herstellung eines hochreinen kolloidalen Silikasols, das im Wesentlichen frei von metallbasierten Verunreinigungen ist, sind bereits bekannt. Ultrareine kolloidale Silikasole können z. B. über einen Sol-Gel-Prozess durch NH₄OH-katalysierte Hydrolyse und Kondensation eines organischen Silans wie Tetramethoxysilan (TMOS) oder Tetraethoxysilan (TEOS) in alkoholischer Lösung erhalten werden (vgl. z.B. "Colloidal Silica - Fundamentals and Applications", Editoren: H. E. Bergma, W. O. Roberts, CRC Press, 2006, ISBN: 0-8247-0967-5). Die auf diese Weise erhaltenen kolloidalen Silikasole zeichnen sich, beruhend auf der sehr hohen Reinheit der Ausgangsstoffe, durch sehr geringe Mengen metallbasierter Verunreinigungen (ppb-Bereich) aus. Nachteilig wirken sich jedoch insbesondere die hohen Kosten der Ausgangsstoffe sowie Rückstände an Ammoniak und organischem Lösungsmittel, welche für CMP-Anwendungen unerwünscht sind, aus.

Auch das in der US Patentanmeldung 11/818,730 erläuterte Verfahren zur Herstellung eines hochreinen kolloidalen Silikasols (metallbasierte Verunreinigungen im Bereich 5-200 ppb, ausgenommen Na mit <1 ppm) basiert auf der Verwendung eines hochreinen Ausgangsstoffs, in diesem Fall pyrogenem Siliziumdioxid. Das pyrogene Siliziumdioxid wird demgemäss in wässriger Alkalimetallhydroxidlösung gelöst, der Alkalimetallgehalt über einen sauren Kationenaustauscher entfernt und anschließend die Partikelbildung durch Einstellung der Temperatur, des pH-Wertes und der Konzentration der Kieselsäurelösung initiiert. Das eingesetzte pyrogene Siliciumdioxid kann beispielsweise durch Hydrolyse von SiCl₄ in einer H₂/O₂-Flamme in einer Vorrichtung mit metallfreier Oberfläche mit einem Verunreinigungsgehalt <100 ppb erhalten werden (EP 1503957 A1). Nachteilig wirkt sich neben der Komplexität der vorstehend beschriebenen Sol-Herstellungsroute wiederum die Verwendung vergleichsweise kostenintensiver Ausgangsstoffe aus.

Insofern mangelte es in der Vergangenheit nicht an Versuchen zur Entwicklung von Verfahren zur Herstellung kolloidaler Silikasole in einer für CMP-Anwendungen ausreichenden Reinheit (Gehalt metallbasierter Verunreinigungen im niedrigen ppm-Bereich) auf Basis einer Aufreinigung technischer Alkalimetallsilikatlösungen, insbesondere Wasserglas, als wesentlich kostengünstigere Rohstoffquelle. Üblicherweise wird hierbei die wässrige Alkalimetallsilikatlösung in einem ersten Schritt zur Entfernung der Alkalimetallionen aus der Lösung mit einem sauren Kationenaustauscher vom Wasserstoff-Typ in Kontakt gebracht.

Die JP 2003-089786 A schlägt z. B. ein Verfahren zur Herstellung eines kolloidalen Silikasols mit niedrigem Gehalt an metallbasierten Verunreinigungen (Alkalimetall ≤ 50 ppm; Cu < 100 ppb; Zn < 1000 ppb; Ca ≤ 7 ppm, Mg ≤ 10 ppm, Fe ≤ 13 ppm) durch Aufreinigung einer 3-10 Gew.%-igen wässrigen Alkalimetallsilikatlösung vor. Hierbei wird die wässrige Alkalimetallsilikatlösung zunächst mit einem sauren Kationenaustauscher vom Wasserstoff-Typ zur Entfernung des Gehalts metallbasierter Verunreinigungen an Alkalimetallen kontaktiert, die resultierende Kieselsäurelösung mit einem pH-Wert im Bereich 2-6 dann zur Entfernung metallbasierter Verunreinigungen mehrwertiger Metalle über ein Harz mit chelatbildenden funktionellen Gruppen geleitet und anschließend durch Alkalisieren mit einem Amin oder quarternären Ammoniumhydroxid auf einen pH-Wert > 8 bei einer Temperatur von 95-100°C zur Bildung kolloidaler Partikel mit einem finalen Partikeldurchmesser im Bereich von 5-150 nm gebracht. Optional können vor der Solbildung Oxidationsmittel und/oder lösliche Chelatbildner zugegeben werden wobei letztere dazu dienen im Rahmen der abschließenden Konzentrierung des Sols mittels Ultrafiltration auf 10-60 Gew.% SiO₂-Gehalt metallbasierte Verunreinigungen in Form wasserlöslicher Chelatkomplexe abzutrennen. Die mittels dieses Prozesses erreichbare Reinheit bzgl. metallbasierter Verunreinigungen einzelner Metalle, insbesondere höherwertige Metalle wie z.B. Zr und Al, wird jedoch für CMP-Anwendungen als unzureichend angesehen.

Das in der EP 0537375 A1 beschriebene Verfahren zur Herstellung wässriger kolloidaler Silikasole hoher Reinheit geht von einer wässrigen Alkalimetallsilikatlösung in einer Konzentration von 1-6 Gew.% als SiO₂, welche einen Gehalt an metallbasierten Verunreinigungen von 300-10000 ppm enthält, aus. Diese wird ebenfalls in einem ersten Schritt über einen sauren Kationenaustauscher vom Wasserstoff-Typ zur Abtrennung des Gehalts metallbasierter Verunreinigungen an Alkalimetallen geleitet wobei optional ein Anionenaustausch mit einem basischen Anionenaustauscher vom Hydroxyl-Typ nachgelagert sein kann. Die resultierende aktive Kieselsäurelösung (pH-Wert: 2-4) wird durch Zugabe einer starken Säure auf einen pH-Wert von 0 bis 2 eingestellt und für eine Zeitdauer von 0,1-120 h bei konstanter Temperatur im Bereich 0-100°C gehalten bevor sie zur Abtrennung metallbasierter Verunreinigungen und mit der Säure eingeführter Gegenionen zuerst mit einem sauren Kationenaustauscher vom Wasserstoff-Typ und dann mit einem basischen Anionenaustauscher vom Hydroxyl-Typ in Kontakt gebracht wird. Die erhaltene aufgereinigte Kieselsäure wird anschließend zur Initiierung des Partikelwachstums über einen Zeitraum von 1-20 h in eine auf 60-150°C temperierte hochreine wässrige Alkalimetallsilikat- oder Alkalimetallhydroxidlösung eingebracht bis ein Molverhältnis SiO₂/M₂O (M: Alkalimetall) im Bereich 30-300 eingestellt ist. Nach Alterung bei gegebener Temperatur für weitere 0,1-10 h wird das gebildete stabile Sol mit mittleren Partikelgrößen im Bereich 10-30 nm durch eine mikroporöse Membran auf 30-50 Gew.% SiO₂ konzentriert und anschließend in einem finalen Reinigungsschritt zuerst mit einem sauren Kationenaustauscher vom Wasserstoff-Typ, dann mit einem basischen Anionenaustauscher vom Hydroxyl-Typ und anschließend mit einem weiteren sauren Kationenaustauscher vom Wasserstoff-Typ in Kontakt gebracht. Nach abschließender Stabilisierung durch Zugabe von Ammoniak wird auf diese Weise ein wässriges Silikasol (pH-Wert: 8-10,5) mit einem Gesamtgehalt an metallbasierten Verunreinigungen mehrwertiger Metalle < 300 ppm erhalten. Der Gehalt metallbasierter Verunreinigungen an Alkalimetallen ist jedoch mit > 800 ppm bezogen auf den SiO₂-Anteil des Sols für CMP-Anwendungen deutlich zu hoch.

Die JP 2006-036612 A beschreibt eine Methode zur Herstellung hochreiner wässriger Kieselsäurelösungen aus wässrigen Alkalimetallsilikatlösungen mit einem Ausgangsgehalt metallbasierter Verunreinigungen mehrwertiger Metalle im Bereich von ca. 100-40000 ppm basierend auf dem Zusatz eines wasserlöslichen stickstoff- oder phosphorhaltigen Chelatbildners, welcher mit den metallbasierten Verunreinigungen anionische Metallkomplexe bildet. Diese werden der Lösung durch Kontakt mit einem basischen Anionenaustauscher vom Hydroxyl-Typ - nach einem zwischengeschalteten Verfahrensschritt zur Abtrennung der Alkalimetallkationen durch Ionenaustausch mit einem sauren Kationenaustauscher vom Wasserstofftyp - entzogen. Während das Verfahren eine deutliche Reduktion des Gehalts metallbasierter Verunreinigungen an Zn um einen Faktor > 18 ermöglicht, ist der Reinigungseffekt bzgl. der metallbasierten Verunreinigungen weiterer Elemente (Cu, Mn, Ni und Fe) wesentlich geringer, so dass eine weitergehende Aufreinigung vor einem Schritt des Kolloidpartikelwachstums für CMP-Anwendungen unerlässlich wäre.

Die WO 2010/037702 A1 und WO 2010/037705 A1 beschreiben Verfahren zur Herstellung von hochreinem festen SiO₂ aus Silikatlösungen durch Fällungsreaktion. Hierbei wird wässrige Alkalimetallsilikatlösung in eine Vorlage einer im Überschuss eingesetzten starken Säure eingetropft wobei der pH-Wert während des gesamten Prozesses im Bereich von 0 bis kleiner als 2 zu halten ist. Die schockartige Überführung in das saure Milieu führt zu einer schnellen Gelierung an der Tropfenhülle, so dass gut filtrierbare Partikel mit Dimensionen im d₅₀-Bereich von 0,1-10 mm ausgefällt werden, welche in Abhängigkeit von der Lösungsviskosität und Tropfgeschwindigkeit unterschiedliche, charakteristische Formen aufweisen können. Durch den sehr niedrigen pH-Wert wird sichergestellt, dass an der Oberfläche der Kieselsäure idealer Weise keine freien, negativ geladenen SiO-Gruppen, welche zur Anbindung störender Metallionen führen können, vorliegen. Die somit in dissoziierter Form vorliegenden Metallionen können daher durch Waschen des Filterkuchens effektiv von der ausgefällten Kieselsäure abgetrennt werden. Das nach Trocknung erhaltene Siliziumdioxid zeichnet sich durch eine vergleichsweise hohe Reinheit bezüglich eines breiten Spektrums von metallbasierten Verunreinigungen mit einem Gehalt an Fe, Al, Ti ≤ 5 ppm; an Ca, Ni, Zu ≤ 1 ppm und an Alkalimetallen ≤ 10 ppm aus und dient als Ausgangsstoff für die Produktion von Solarsilizium. Angesichts der makroskopischen Partikelgrößen ist diese Fällungskieselsäure jedoch ohne Weiteres nicht für CMP-Anwendungen geeignet.

Angesichts der Defizite der bisher vorgeschlagenen Prozesse besteht weiterhin Bedarf an einem effektiven und kostengünstigen Verfahren mit einfacher Prozessführung zur Herstellung wässriger kolloidaler Silikasole in einer Reinheit, die den Anforderungen der Verwendung als Abrasivum in chemisch-mechanischen Polierverfahren (CMP) in der Halbleiter- und Elektronikindustrie genügt.

Die technische Aufgabe der vorliegenden Erfindung war es daher ein Verfahren zur Herstellung wässriger kolloidaler Silikasole hoher Reinheit zur Verfügung zu stellen, welches die Nachteile der oben genannten Verfahren überwindet oder nur in reduzierter Form aufweist.

Diese Aufgabe wird durch das in der nachfolgenden Beschreibung, den Beispielen und den Ansprüchen beschriebene Verfahren gelöst.

Das Verfahren der vorliegenden Erfindung zur Herstellung eines wässrigen kolloidalen Silikasols ist dadurch gekennzeichnet, dass es die nachfolgenden Schritte umfasst:
a. Herstellung einer wässrigen Lösung eines wasserlöslichen Alkalimetallsilikats mit einem pH-Wert von kleiner 2, bevorzugt kleiner 1,5, besonders bevorzugt kleiner 1, ganz besonders bevorzugt kleiner 0,5 durch Mischen eines wasserlöslichen Alkalimetallsilikats oder einer wässrigen Alkalimetallsilikatlösung mit einem Säuerungsmittel
   a1. In Kontakt Bringen der gemäss Verfahrensschritt a) erhaltenen sauren Alkalimetallsilikatlösung mit einem Harz welches chelatbildende funktionelle Gruppen mit Bindungsaffinität zu zwei- oder höherwertigen Metallionen enthält, wobei die chelatbildende funktionellen Gruppen Phosphonsäure- und/oder substituierte oder unsubstituierte Aminophosphonsäuregruppen und/oder Sulfonsäuregruppen und/oder Carboxylgruppen enthalten
b. In Kontakt Bringen der gemäss Verfahrensschritt a1) erhaltenen sauren Alkalimetallsilikatlösung mit einem basischen Anionenaustauscherharz vom Hydroxyl-Typ und einem sauren Kationenaustauscherharz vom Wasserstoff-Typ in beliebiger Reihenfolge-wobei das Anionenaustauscherharz und das Kationenaustauscherharz räumlich getrennt oder durchmengt eingesetzt werden
c. Bildung eines stabilen kolloidalen Silikasols durch Einstellen einer/eines zur Keimbildung und Partikelwachstum geeigneten Temperatur, Konzentration und pH-Wertes der aus Schritt b) erhaltenen wässrigen Kieselsäurelösung.

Ferner können in allen Ausführungsvarianten des Verfahrens optional ein oder mehrere Alterungsschritte vor, während oder nach einem oder mehreren der Prozessschritte a), a1), b) und/oder c) implementiert werden. Unter einem Alterungsschritt ist hierbei ein Prozessschritt zu verstehen, in dem die wässrige SiO₂-haltige Lösung bzw. Dispersion ohne stoffliche Zugabe oder Entnahme bei konstanter Temperatur für eine bestimmte Zeit gehalten wird (Alterung). In einer besonderen Ausführungsform des erfindungsgemäßen Verfahrens kann beispielsweise eine Alterung der aus Verfahrensschritt a) und/oder der aus Verfahrensschritt a1) erhaltenen sauren Alkalimetallsilikatlösung bei einer Temperatur im Bereich von 10 bis 100°C für eine Dauer von 0 bis 100 h, bevorzugt 0 bis 48 h, erfolgen.

Die Erfinder haben überraschend festgestellt, dass es durch geeignete pH-Führung in Kombination mit Ionenaustauschern auf einfache Weise möglich ist, ausgehend von wässrigen Alkalimetallsilikatlösungen als kostengünstiger Rohstoffbasis hochreine wässrige Kieselsäure zu gewinnen und aus dieser auf direktem Wege, ohne Ausfällung eines Feststoffs als Zwischenprodukt, wässrige kolloidale Silikasole in einer für CMP-Anwendungen ausreichenden Reinheit herzustellen. Ein wesentliches Verfahrensmerkmal besteht dabei darin, dass die Ausgangslösung eines wasserlöslichen Alkalimetallsilikats vor Durchführung jeglicher der Aufreinigung dienender Ionenaustauschschritte auf einen sehr niedrigen pH-Wert im Bereich von 0 bis kleiner als 2 eingestellt wird. Ohne an eine bestimmte Theorie gebunden zu sein, sind die Erfinder der Ansicht, dass durch den sehr niedrigen pH-Wert möglicherweise sichergestellt wird, dass auf der Kieselsäureoberfläche idealer Weise keine freien, negativ geladenen SiO-Gruppen, an die störende Metallionen angebunden werden können, vorhanden sind. Bei sehr niedrigem pH-Wert kann die Kieselsäureoberfläche bedingt durch die Protonierung sogar positiv geladen sein, so dass Metallkationen von der Kieselsäureoberfläche abgestoßen werden. Nimmt die Kieselsäureoberfläche eine positive Ladung an, wird zudem durch elektrostatische Abstoßung zwischen den einzelnen Kieselsäurespezies verhindert, dass sich diese aneinander anlagern und dadurch Hohlräume gebildet werden in denen sich Verunreinigungen einlagern könnten. Störende metallbasierte Verunreinigungen liegen daher vornehmlich als von der Kieselsäure dissoziierte, in der Lösung frei bewegliche Kationen vor und können somit durch Ionenaustausch unter stark sauren Bedingungen wirkungsvoll aus der Lösung entfernt werden.

Unter der Bezeichnung "metallbasierte Verunreinigungen (an Metall x)" sind im Rahmen der vorliegenden Erfindung in den hergestellten kolloidalen Silikasolen oder den Materialien aus denen diese hergestellt werden, enthaltene(s) Metall(e) zu verstehen wobei diese(s) in elementarer und/oder ionischer Form und/oder als Verbindung(en) vorliegen kann/können. Gehaltsangaben metallbasierter Verunreinigungen beziehen sich hierbei, soweit nichts anderes bestimmt ist, auf den Gehalt eines Metalls/einer Gruppe von Metallen unter Berücksichtigung des Vorliegens in elementarer und ionischer Form sowie in Form von Verbindungen im gegebenenfalls gelöstem oder dispergiertem SiO₂-basierten Festkörper, ausgedrückt in Gewichtsanteilen (ppm) des betreffenden metallischen Elements bzw. der betreffenden metallischen Elemente.

Das erfindungsgemäße Verfahren kann in herkömmlichen Apparaturen durchgeführt werden und ermöglicht gegenüber aus dem Stand der Technik bekannten Verfahren, die auf Alkalimetallsilikatlösungen als Ausgangsmaterial beruhen, eine wesentlich einfachere und effektivere Aufreinigung bezüglich eines breiten Spektrums metallbasierter Verunreinigungen. Die Verwendung kostengünstiger, leicht verfügbarer technischer Alkalimetallsilikatlösungen wie Wasserglas als Ausgangsmaterial zur Herstellung von wässrigen kolloidalen Silikasolen in einer für CMP-Anwendungen ausreichenden Reinheit stellt einen weiteren, wirtschaftlich bedeutsamen Vorteil des Verfahrens dar.

Das in Schritt a) des erfindungsgemäßen Verfahrens eingesetzte wasserlösliche Alkalimetallsilikat oder dessen wässrige Lösung kann ein beliebiges wasserlösliches Alkalimetallsilikat oder dessen wässrige Lösung sein. Bevorzugt werden jedoch Natriumsilikat(lösung) und/oder Kaliumsilikat(lösung) verwendet. Auch Mischungen mehrerer Silikatlösungen können verwendet werden. Als preiswerte Industrieprodukte sind insbesondere Wassergläser, die großtechnisch durch Zusammenschmelzen von Quarzsand mit Soda oder Pottasche bei Temperaturen um 1200°C und anschließendem Lösen des abgeschreckten Alkalimetallsilikats in Wasser unter Druck und erhöhter Temperatur hergestellt werden, interessant. Als wasserlösliches Alkalimetallsilikat bzw. dessen wässrige Lösung wird im erfindungsgemäßen Verfahrensschritt a) daher insbesondere ein Natriumwasserglas und/oder Kaliwasserglas welches ein Molverhältnis von SiO₂/A₂O (A: Na oder K) von 4,5 bis 1,5, bevorzugt 4,2 bis 1,7, besonders bevorzugt 4,0 bis 2,0 aufweist, verwendet. Kommerzielle Wassergläser enthalten im Allgemeinen neben ihrem Silizium- und Alkalimetallgehalt metallbasierte Verunreinigungen an mehrwertigen Metallen wie Al, Fe, Zr, Ti, Ca, Mg sowie P, welche im Wesentlichen ionisch und/oder in Form ihrer oxidischen Verbindungen vorliegen. Eine kommerziell von der Firma PQ Corp. (Surrey) vertriebene Wasserglaslösung mit einem Anteil an SiO₂ von 28,9 Gew.-% und Na₂O von 8,97 Gew.% enthält beispielsweise 89 ppm Al, 50 ppm Fe, 18 ppm Ti, 12 ppm Ca, 0,8 ppm, Ba, 7,9 ppm Mg, 31 ppm Zr und 4,5 ppm P bezogen auf die Lösung. Metallbasierte Verunreinigungen können bei Verwendung von Wassergläsern, welche aus industriellen Abfallprodukten wie etwa siliziumhaltigen Flugstäuben gewonnen werden (z.B. nach dem Verfahren der EP 0006202 A1), sogar in Konzentrationen bis zu mehreren 10000 ppm bezogen auf den SiO₂-Gehalt enthalten sein.

Grundsätzlich können für das erfindungsgemäße Verfahren auch wasserlösliche Alkalimetallsilikate oder deren wässrige Lösungen, die sich bereits durch eine hohe Reinheit auszeichnen, wie etwa aus pyrogener Kieselsäure hergestellte Alkalimetallsilikatlösungen, eingesetzt werden. Diese Möglichkeit wird aber aufgrund der höheren Kosten für das Ausgangsmaterial nur dann interessant sein, wenn die für eine bestimmte Anwendung erforderlichen Reinheitsanforderungen nicht durch verfahrensgemäße Aufreinigung von günstigeren Ausgangsmaterialien wie etwa Wasserglas erfüllen lassen.

Bei dem in Schritt a) der erfindungsgemäßen Erfindung verwendeten Säuerungsmittel kann es sich um Salzsäure, Phosphorsäure, Salpetersäure, Schwefelsäure, Chlorsulfonsäure, Sulfurylchlorid oder Perchlorsäure in konzentrierter oder verdünnter Form oder um Gemische der vorgenannten Säuren handelt, wobei jedoch auch andere Säuerungsmittel, sofern sie zur Einstellung der unten näher erläuterten Prozessbedingungen geeignet sind, eingesetzt werden können. Verdünnungen sind gegebenenfalls durch Zugabe von. Wasser, vorzugsweise destilliertem Wasser oder voll entsalztem Wasser vorzunehmen. Insbesondere kann Salzsäure, bevorzugt 0,2 bis 14 N, besonders bevorzugt 1 bis 12 N, ganz besonders bevorzugt 1 bis 10 N, speziell bevorzugt 1 bis 7 N und ganz speziell bevorzugt 3 bis 6 N, Phosphorsäure, bevorzugt 0,2 bis 59 N, besonders bevorzugt 2 bis 50 N, ganz besonders bevorzugt 3 bis 40 N, speziell bevorzugt 3 bis 30 N und ganz speziell bevorzugt 4 bis 20 N, Salpetersäure, bevorzugt 0,2 bis 24 N, besonders bevorzugt 0,2 bis 20 N; ganz besonders bevorzugt 0,2 bis 15 N, speziell bevorzugt 2 bis 10 N, Schwefelsäure, bevorzugt 0,1 bis 37 N, besonders bevorzugt 0,1 bis 30 N, ganz besonders bevorzugt 1 bis 20 N, speziell bevorzugt 1 bis 10 N verwendet werden. Ganz besonders bevorzugt wird Schwefelsäure verwendet.

Zum Mischen des wasserlöslichen Alkalimetallsilikats oder seiner wässrigen Lösung mit dem Säuerungsmittel zur Herstellung einer wässrigen Alkalimetallsilikatslösung mit einem pH-Wert von kleiner 2, bevorzugt kleiner 1,5, besonders bevorzugt kleiner 1, ganz besonders bevorzugt kleiner 0,5 in Schritt a) des erfindungsgemäßen Verfahrens können sämtliche bekannten Mischtechniken und -apparaturen wie z.B. statische Mischer oder dynamische Mischer wie Rotor-Stator-Maschinen (z.B. Cavitron^{®}) eingesetzt werden. Zum kontinuierlichen Mischen des Säuerungsmittels und des Alkalimetallsilikats oder dessen wässriger Lösung kann ein statischer Mischer oder ein dynamischer Mischer (z.B. Cavitron^{®}) verwendet werden, wobei bevorzugt ein statischer Mischer verwendet wird. Die mit dem Reaktionsmedium oder mindestens einer der Ausgangskomponenten in Kontakt kommenden Teile des Mischers sollten aus einem Material gefertigt sein, welches eine hohe chemische Widerstandsfähigkeit gegenüber dem stark sauren Reaktionsmedium sowie den Ausgangskomponenten aufweist und keine Verunreinigungen in das Reaktionsmedium einführt. Geeignete Materialien sind beispielsweise Kunststoffe wie Polypropylen oder fluorierte Polymere, z. B. Polytetrafluorethylen oder Polyvinylidenfluorid, oder korrosionsbeständige Hochleistungslegierungen wie etwa Hastelloy oder Inconel, wobei bevorzugt die erwähnten Kunststoffe verwendet werden.

Das Säuerungsmittel kann vorgelegt und das wasserlösliche Alkalimetallsilikat oder seine wässrigen Lösung zugegeben werden oder vice versa das wasserlösliche Alkalimetallsilikat oder seine wässrigen Lösung vorgelegt und das Säuerungsmittel zugegeben werden. In einer bevorzugten Variante des erfindungsgemäßen Verfahrens wird das Säuerungsmittel vorgelegt und das wasserlösliche Alkalimetallsilikat oder die wässrige Alkalimetallsilikatlösung zugegeben Hierbei ist es bevorzugt, dass das wasserlösliche Alkalimetallsilikat oder seine wässrigen Lösung eine hohe Säurekonzentration "sieht", um die Metallionen, insbesondere höherwertige Metallionen wie z.B. Fe, Al und Zr, in ihre dissoziiert Form zu überführen und somit in der Folge effektiv von der Kieselsäure abtrennen zu können. Darüber hinaus sollte der Wechsel des pH-Wertes in bevorzugter Weise schnell erfolgen, so dass der neutrale pH-Bereich, in dem die Silikatlösung die geringste Stabilität gegenüber Gelierung durch fortschreitende Polykondensation von Silanolgruppen aufweist, möglichst rasch durchschritten wird. Das Reaktionsmedium kann bei Bedarf erhitzt werden und sollte eine Temperatur zwischen 0 und 100°C aufweisen, wobei je nach SiO₂-Konzentration die Temperatur nicht zu hoch gewählt werden darf, um eine Gelierung bzw. Ausfällung von Partikeln zu verhindern. Aufgrund der unvermeidlichen allmählichen Polykondensation der Kieselsäuren in der sauren wässrigen Alkalimetallsilikatslösung unterliegt diese einem Alterungsprozess.

Das wasserlösliche Alkalimetallsilikat sollte in der nach Verfahrensschritt a) erhaltenen sauren wässrigen Alkalimetallsilikatslösung in einer Konzentration von 1 bis 8 Gew.%, bevorzugt 3 bis 7 Gew.%, besonders bevorzugt 4 bis 6 Gew.% bezogen auf den SiO₂-Gehalt gelöst sein. Die Säure sollte hierbei in einer Menge eingesetzt werden, die zur Einstellung eines Konzentrationsverhältnis (bezogen auf Gewichtsanteile) zwischen Alkalimetallsilikat (bezogen auf den SiO₂-Gehalt) und dem Säuerungsmittel (bezogen auf dessen im Verfahrensschritt a) eingesetzter Gesamtmenge)in einem Bereich von 0,4 bis 40, bevorzugt 1 bis 20, besonders bevorzugt 2 bis 10 in der nach Mischung erhaltenen sauren wässrigen Alkalimetallsilikatslösung geeignet ist. In einer ganz besonders bevorzugten Ausführungsform der vorliegenden Erfindung enthält die saure wässrige Alkalimetallsilikatslösung 4 bis 6 Gew.% SiO₂ und 2-6 Gew.% eingesetzter H₂SO₄. Ein Teil der eingesetzten H₂SO₄ wird hierbei durch Neutralisation verbraucht. Ein SiO₂-Gehalt größer als 8 Gew.% könnte dazu führen, dass die Polykondensation von Silanolgruppen deutlich schneller voran schreitet, so dass die saure wässrige Alkalimetallsilikatslösung innerhalb der für die Durchführung des erfindungsgemäßen Verfahrens benötigten Zeit geliert. Insbesondere könne es bedingt durch eine derartig hohe SiO₂-Konzentration zu einer Gelierung auf den Ionenaustauschern kommen, so dass die Wirtschaftlichkeit des Verfahrens verringert würde. Ein SiO₂-Gehalt kleiner als 1 Gew.% ist andererseits nicht wünschenswert, da dies die Effektivität des Verfahrens soweit herabsetzen könnte, dass dieses wirtschaftlich nicht mehr tragbar wäre. Oberhalb eines Konzentrationsverhältnis zwischen Alkalimetallsilikat (bezogen auf den SiO₂-Gehalt) und dem Säuerungsmittel von 40 kann das für eine effektive Abtrennung der Metallverunreinigungen notwendige Maß der Protonierung der Kieselsäure, welche zu einer positiven elektrischen Ladung der Kieselsäureoberfläche führen sollte, möglicherweise nicht gewährleistet werden, wohingegen unterhalb eines Wertes dieses Verhältnisses von 0,4 übermäßig viel Säure eingeführt wird, so dass der Ballast an mittels Ionenaustausch im Rahmen des Aufreinigungsprozesse zu entfernender Anionen möglicherweise unnötig erhöht wird.

In einer bevorzugten Variante des erfindungsgemäßen Verfahrens wird in die saure wässrige Alkalimetallsilikatslösung aus Schritt a) ein Oxidationsmittel, z. B. ein Peroxid oder Perchlorat zugegeben. Besonders bevorzugt handelt es sich dabei um Wasserstoffperoxid oder Kaliumperoxodisulfat. Insbesondere ist bevorzugt, dass die saure wässrige Alkalimetallsilikatslösung Wasserstoffperoxid umfasst. Durch die oxidierende Wirkung des Oxidationsmittels können metallbasierte Verunreinigungen, die in verschiedenen Oxidationszuständen auftreten in einen höherwertigen Oxidationszustand überführt werden. Unterscheiden sich die Bindungsaffinitäten der verschiedenen Oxidationszustände bzgl. der in Schritt a1) und/oder b) des erfindungsgemäßen Verfahrens eingesetzten Ionenaustauschermaterialien mag somit eine effizientere Abtrennung von Metallverunreinigungen gelingen. Zudem ergeben Peroxide mit Ti(IV)-Ionen unter sauren Bedingungen eine Titanperoxoverbindung, die einen gelborangenen Farbeindruck hervorruft. Durch die gelborange Färbung der sauren wässrigen Alkalimetallsilikatslösung kann der Grad der Aufreinigung während der Aufreinigung im Rahmen des erfindungsgemäßen Verfahrens visuell nachvollzogen werden. Es hat sich nämlich herausgestellt, dass gerade Titan eine sehr hartnäckige Verunreinigung darstellt, welche bereits bei pH-Werten oberhalb von 2 bereitwillig an Kieselsäure anlagert. Die Erfinder haben herausgefunden, dass bei Verschwinden der gelborangenen Färbung in der Regel eine für CMP-Anwendungen kolloidaler Silikasole ausreichende Reinheit der als Zwischenprodukt auftretenden Kieselsäure erreicht wird. Um diese Indikatorfunktion des Peroxids zu nutzen ist es auch möglich das Peroxid nicht in Schritt a) sondern in einem beliebigen anderen Verfahrensschritt zuzugeben.

Im Schritt a1) des erfindungsgemäßen Verfahrens wird die in Schritt a) hergestellte saure wässrige Alkalimetallsilikatlösung vor Durchführung von Schritt b) mit einem Harz welches chelatbildende funktionelle Gruppen mit Bindungsaffinität zu zwei- oder höherwertigen Metallionen enthält in Kontakt gebracht. Bei diesem Harz handelt es sich um ein Harz welches Phosphonsäure- und/oder (substituierte) Aminophosphonsäuregruppen und/oder Sulfonsäuregruppen und/oder Carboxylgruppen als chelatbildende funktionelle Gruppen enthält und für einen Ionenaustausch unter stark sauren Bedingungen ausgelegt ist. Solche Harze sind als Handelsprodukte für die industrielle Verwendung erhältlich, z.B. unter den Bezeichnungen Purolite S957, Purolite S940, Purolite S950 (Fa. Purolite), Lewatit TP260 (Fa. LanXess), Diphonix (Fa. Triskem) oder Amberlite IRC747 (Fa. Rohm und Haas). Purolite S957 und Lewatit TP260 werden im Rahmen der vorliegenden Erfindung besonders bevorzugt verwendet.

Der Kontakt der oben erwähnten sauren Alkalimetallsilikatlösung mit dem oben beschriebenen Harz wird in Verfahrensschritt a1) vorzugsweise ausgeführt, indem man die saure Alkalimetallsilikatlösung bei 4 bis 100°C, vorzugsweise 10 bis 40°C durch eine Säule, welche mit dem Harz in einer Menge, die für den Austausch des 1-1000 fachen der Gesamtmenge der in der Lösung vorhandenen Verunreinigungen an mehrwertigen Metallen ausreicht, gefüllt ist, leitet.
Die durch die Säule geleitete saure wässrige Alkalimetallsilikatlösung welche einen pH-Wert im Bereich von 0 bis 2 aufweist, enthält nur noch sehr geringe Konzentrationen mehrwertiger Metallverunreinigungen während Alkalimetallionen und Säureanionen, die in Schritt a) eingeführt wurden noch in größeren Konzentrationen vorliegen. So weist bei Verwendung von Schwefelsäure als Säuerungsmittel die aus Verfahrensschritt a1) erhaltene saure wässrige Alkalimetallsilikatlösung im erfindungsgemäßen Verfahren typischerweise einen Gehalt an Al ≤ 5ppm, Ti ≤ 7 ppm, Zr ≤ 5 ppm, Fe ≤ 20 ppm, Na ≥ 1000 ppm und S ≥ 1000 ppm bezogen auf den SiO₂-Gehal auf.

In Schritt b) des erfindungsgemäßen Verfahrens wird die aus Verfahrensschritt a1) erhaltene saure wässrige Alkalimetallsilikatlösung mit einem basischen Anionenaustauscherharz vom Hydroxyl-Typ und einem sauren Kationenaustauscherharz vom Wasserstoff-Typ in Kontakt gebracht. Der Anionenaustausch dient der Abtrennung von Anionen, insbesondere der in Schritt a) eingeführten Säureanionen, während durch den Kationenaustausch der Gehalt an metallbasierten Verunreinigungen, insbesondere auch die Konzentration der in der Lösung enthaltenen Alkalimetallkationen maßgeblich reduziert wird. Bei dem eingesetzten basischen Anionenaustauscherharz vom Hydroxyl-Typ bzw. dem sauren Kationenaustauscherharz vom Wasserstoff-Typ kann es sich hierbei um beliebige Harze, die bisher in diesem technischen Gebiet zur Entfernung von Anionen bzw. Metallkationen aus wasserglashaltiger wässriger Lösung verwendet wurden, handeln. Beispiele für geeignete, kommerziell verfügbare Harze sind Lewatit S100 (gelförmig) und Lewatit SP112 (makroporös) als stark saure Kationenaustauscherharze vom Wasserstoff-Typ sowie Lewatit CNP80 als schwach saures Kationenaustauscherharz vom Wasserstoff-Typ, Lewatit M600 (gelförmig) und Lewatit MP500 (makroporös) als stark basische Anionenaustauscherharze vom Hydroxyl-Typ sowie Lewatit MP62 als schwach basisches Anionenaustauscherharz vom Hydroxyl-Typ.

Der Kontakt kann in Verfahrensschritt b) so ausgeführt werden, dass die oben erwähnte saure wässrige Alkalimetallsilikatlösung zunächst mit dem basischen Anionenaustauscherharz vom Hydroxyl-Typ und anschließend, räumlich getrennt, mit dem sauren Kationenaustauscherharz vom Wasserstoff-Typ in Kontakt gebracht wird, oder vice versa, zunächst mit dem sauren Kationenaustauscherharz vom Wasserstoff-Typ und dann, räumlich getrennt, mit dem basischen Anionenaustauscherharz vom Hydroxyl-Typ in Kontakt gebracht wird. Hierbei kann die saure wässrige Alkalimetallsilikatlösung auch in einem Kreislauf geführt mehrmals mit den besagten Ionenaustauschern in vorstehend beschriebener Weise in Kontakt gebracht werden. Bevorzugt erfolgt der Anionenaustausch vor dem Kationenaustausch, da infolge der durch den Anionenaustausch verringerten Protonenkonzentration in Lösung die Austauscheffektivität bezüglich der gelösten Metallkationen im Kationenaustausch erhöht wird. In einer weiteren bevorzugten Ausführungsform der vorliegenden Erfindung wird der Kontakt in Verfahrensschritt b) in der Weise ausgeführt, dass das saure Kationenaustauscherharz vom Wasserstoff-Typ und das basische Anionenaustauscherharz vom Hydroxyl-Typ durchmengt, d. h. in einem Mischbett eingesetzt werden. Allerdings sind bei diesem durchmengtem Einsatz der Ionenaustauscherharze diese zur Regeneration zu trennen. Die unvermeidbar, je nach Prozessbedingungen in unterschiedlichem Maße, auftretenden SiO₂-Gelierungsverluste können im Allgemeinen durch Behandlung der im Rahmen der vorliegenden Erfindung verwendeten Ionenaustauscherharze mit wässriger Alkalimetallhydroxidlösung in Form wässriger Alkalimetallsilikatlösung wiedergewonnen werden.

Der Kontakt in Verfahrensschritt b) wird darüber hinaus insbesondere ausgeführt, indem man die saure wässrige Alkalimetallsilikatlösung bei 4 bis 100°C, vorzugsweise 10 bis 40°C durch eine Säule, die mit dem basischen Anionenaustauscherharz vom Hydroxyl-Typ und dem sauren Kationenaustauscherharz vom Wasserstoff-Typ in durchmengter Weise gefüllt ist, oder durch mehrere miteinander sequentiell verbundene Säulen, welche das basische Anionenaustauscherharz vom Hydroxyl-Typ und das saure Kationenaustauscherharz. vom Wasserstoff-Typ in räumlich getrennter Form enthalten, leitet. Das Anionenaustauscherharz wird hierbei in einer Menge, die für den Austausch des 1-100 fachen der Gesamtmenge der in der kontaktierten Lösung vorhandenen Anionen ausreicht, das Kationenaustauscherharz in einer Menge, die für den Austausch des 1-100 fachen der Gesamtmenge des in der kontaktierten Lösung enthaltenen Gehalts an metallbasierten Verunreinigungen ausreicht, eingesetzt.

Die als Zwischenprodukt nach Schritt b) des erfindungsgemäßen Verfahrens erhaltene wässrige Kieselsäurelösung ist dadurch gekennzeichnet, dass sie einen pH-Wert im Bereich von 1 bis 5, bevorzugt von 2 bis 5, ganz besonders bevorzugt von 3 bis 4 aufweist.

Die als Zwischenprodukt nach Schritt b) des erfindungsgemäßen Verfahrens erhaltene wässrige Kieselsäurelösung kann einen Gehalt an
a. Aluminium kleiner gleich 5 ppm, bevorzugt 0,001 bis 4 ppm, besonders bevorzugt 0,05 bis 3 ppm, ganz besonders bevorzugt 0,1 bis 2 ppm,
b. Calcium kleiner gleich 5 ppm, bevorzugt 0,001 bis 4 ppm, besonders bevorzugt 0,1 bis 3 ppm, ganz besonders bevorzugt 0,5 bis 2 ppm,
c. Eisen kleiner gleich 20 ppm, bevorzugt 0,001 bis 20 ppm, besonders bevorzugt 0,1 bis 15 ppm, ganz besonders bevorzugt 0,5 bis 10 ppm,
d. Barium kleiner gleich 5 ppm, bevorzugt 0,001 bis 4 ppm, besonders bevorzugt 0,05 bis 3 ppm, ganz besonders bevorzugt 0,1 bis 2 ppm,
e. Titan kleiner gleich 7 ppm, bevorzugt 0,001 bis 5 ppm, besonders bevorzugt 0,1 bis 3 ppm, ganz besonders bevorzugt 0,5 bis 2 ppm,
f. Zirkonium kleiner gleich 5 ppm, bevorzugt 0,001 bis 3 ppm, besonders bevorzugt 0,05 bis 2 ppm, ganz besonders bevorzugt 0,1 bis 1 ppm,
g. Magnesium kleiner gleich 5 ppm, bevorzugt 0,001 bis 5 ppm, besonders bevorzugt 0,1 bis 4 ppm, ganz besonders bevorzugt 0,5 bis 3 ppm,
h. Phosphor kleiner gleich 5 ppm, bevorzugt 0,001 bis 3 ppm, besonders bevorzugt 0,01 bis 1 ppm, ganz besonders bevorzugt 0,01 bis 0,5 ppm
aufweisen und die Summe der oben genannten Verunreinigungen kleiner 50 ppm, bevorzugt kleiner 35 ppm, besonders bevorzugt kleiner 25 ppm ist wobei sich alle Gehaltsangaben auf den Anteil an gelöstem Festkörper beziehen.

Diese wässrige Kieselsäurelösung ist eine klare Lösung oder eine kolloidale Lösung. Sie kann durch Alkalisieren mittels Zugabe einer beliebigen herkömmlichen Base wie z.B. Alkalihydroxid oder eines Amins in einem pH-Wert Bereich von 8 bis 12 stabilisiert werden.

Die hochreine in Schritt b) erhaltene wässrige Kieselsäurelösung kann in Schritt c) des erfindungsgemäßen Verfahrens als Ausgangslösung zur Bildung eines wässrigen kolloidalen Silikasols verwendet werden. Das Wachstum kolloidaler Silikapartikel kann hierbei mittels eines beliebigen bekannten Verfahrens zur Bildung eines stabilen wässrigen kolloidalen Silikasols aus wässriger Kieselsäurelösung herbeigeführt werden (vgl. z.B. "The Chemistry of Silica: Solubility, Polymerization, Colloid and Surface Properties and Biochemistry of Silica", R. K. Iler, John Wiley and Sons, 1979 und "colloidal Silica - Fundamentals and Applications", Editoren: H. E. Bergma, W. O. Roberts, CRC Press, 2006, ISBN: 0-8247-0967-5). Üblicherweise werden zu diesem Zwecke die Temperatur, die Konzentration und der pH-Wert der wässrigen Kieselsäurelösung so eingestellt, dass Keimbildung und Partikelwachstum initiiert werden. So wird etwa bei einer gängigen Verfahrensweise der pH-Wert der wässrigen Kieselsäurelösung mit Hilfe von Alkalihydroxid auf einen pH-Wert zwischen 8 und 10,5 eingestellt und die Lösung auf ca. 90°C erhitzt. Die entstehenden Teilchen dienen dann als Keime welche durch Zugabe von weiterer Kieselsäurelösung und Alkalihydroxid bei einem pH-Wert im Bereich von 8 bis 10,5 und einer Temperatur von ca. 90°C zur gewünschten Partikelgröße wachsen. Im Verfahren, das in der EP 0537375 A1 beschrieben ist, erfolgt die Bildung kolloidaler Silikapartikel durch Zulauf einer wässrigen Kieselsäurelösung mit einem SiO₂-Gehalt von 1-6 Gew.% in eine auf 60-150°C temperierte, hochreine wässrige 0,1-8 Gew.% SiO₂-enthaltene Alkalimetallsilikat- oder 0,1-5 Gew.%-ige Alkalimetallhydroxidlösung über einen Zeitraum von 1-20 h bis ein Molverhältnis SiO₂/M₂O (M: Alkalimetall) im Bereich 30-300 eingestellt ist. Die JP 2003-089786 A geht von einer 3-10 Gew.%-igen (bzgl. SiO₂-Gehalt) wässrigen Kieselsäurelösung aus, welche zur Bildung kolloidaler Partikel durch Alkalisieren mit einem Amin oder quarternären Ammoniumhydroxid auf einen pH-Wert > 8 und auf eine Temperatur von 95-100°C eingestellt wird.

Die wässrigen kolloidalen Silikasole sind dadurch gekennzeichnet, dass ihr Gehalt an
a. Aluminium kleiner gleich 5 ppm, bevorzugt 0,001 bis 4 ppm, besonders bevorzugt 0,05 bis 3 ppm, ganz besonders bevorzugt 0,1 bis 2 ppm,
b. Calcium kleiner gleich 5 ppm, bevorzugt 0,001 bis 4 ppm, besonders bevorzugt 0,1 bis 3 ppm, ganz besonders bevorzugt 0,5 bis 2 ppm,
c. Eisen kleiner gleich 20 ppm, bevorzugt 0,001 bis 20 ppm, besonders bevorzugt 0,1 bis 15 ppm, ganz besonders bevorzugt 0,5 bis 10 ppm,
d. Barium kleiner gleich 5 ppm, bevorzugt 0,001 bis 4 ppm, besonders bevorzugt 0,05 bis 3 ppm, ganz besonders bevorzugt 0,1 bis 2 ppm,
e. Titan kleiner gleich 7 ppm, bevorzugt 0,001 bis 5 ppm, besonders bevorzugt 0,1 bis 3 ppm, ganz besonders bevorzugt 0,5 bis 2 ppm,
f. Zirkonium kleiner gleich 5 ppm, bevorzugt 0,001 bis 3 ppm, besonders bevorzugt 0,05 bis 2 ppm, ganz besonders bevorzugt 0,1 bis 1 ppm,
g. Magnesium kleiner gleich 5 ppm, bevorzugt 0,001 bis 5 ppm, besonders bevorzugt 0,1 bis 4 ppm, ganz besonders bevorzugt 0,5 bis 3 ppm,
h. Phosphor kleiner gleich 5 ppm, bevorzugt 0,001 bis 3 ppm, besonders bevorzugt 0,01 bis 1 ppm, ganz besonders bevorzugt 0,01 bis 0,5 ppm
beträgt und die Summe der oben genannten Verunreinigungen kleiner 50 ppm, bevorzugt kleiner 35 ppm, besonders bevorzugt kleiner 25 ppm ist wobei sich alle Gehaltsangaben auf den Anteil an kolloidal dispergierten Festkörper beziehen.

Die wässrigen kolloidalen Silikasole zeichnen sich somit gegenüber aus Alkalimetallsilikatlösungen als Ausgangsmaterial hergestellten kolloidalen Silikasolen, die im Stand der Technik beschrieben sind, durch eine höhere Reinheit bezüglich eines breiten Spektrums an metallbasierten Verunreinigungen aus. Die effiziente Entfernung metallbasierter Verunreinigungen, auch solcher, die konventionell nur schwierig zu entfernen sind, wie etwa Ti oder Zr, ist maßgeblich auf die erfindungsgemäße Verfahrensführung und vor allem auf die Einstellung eines sehr niedrigen pH-Wertes im Bereich von 0 bis kleiner 2 in der Ausgangslösung eines. wasserlöslichen Alkalimetallsilikats vor Durchführung jeglicher der Aufreinigung dienender Ionenaustauschschritte zurückzuführen. Zudem bleiben die gebildeten Partikel während des erfindungsgemäßen Verfahrens im Unterschied etwa zu den in der WO 2010/037705 A1 und der WO 2010/037702 A1 beschriebenen Verfahren im kolloidalen Zustand in Lösung.

Die wässrigen kolloidalen Silikasole weisen eine für CMP-Anwendungen ausreichende Reinheit auf und sind darüber hinaus kostengünstig und auf einfache Weise herstellbar, so dass sie hervorragend für eine Verwendung für Poliermittel, insbesondere im Bereich der Halbleiter- und Elektronikindustrie zum Polieren von Scheiben aus hochreinem Silizium (Wavern), Halbleitermaterialien und -bauteilen, magnetischen Speichermedien und Kristallsubstraten geeignet sind.

Formulierungen von Poliermitteln können neben den wässrigen kolloidalen Silikasolen einen oder mehrere Additive, z.B. weitere abrasiv wirkende Partikel wie Ceroxid-, Aluminiumoxid-, Zirkonoxid- oder organische kolloidale Partikel, Chelatbildner, Oxidationsmittel, grenzflächenaktive Substanz, wasserlösliches Polymer, Korrosionsinhibitor, Fungizid, pH-Indikator, mit Wasser mischbares organisches Lösungsmittel, Farbstoff oder Dispergiermittel enthalten. Geeignete Additive sind beispielsweise in den Absätzen [0071]-[0079] der US 2009223136 aufgeführt.

Die wässrigen kolloidalen Silikasole können durch Ultrafiltration oder Verdampfen der wässrigen Lösungsphase aufkonzentriert werden. Der Zusatz eines wasserlöslichen Chelatbildners zum wässrigen kolloidalen Silikasol oder einer zu dessen Herstellung verwendeten Lösungen bietet in Kombination mit einer Aufkonzentrierung des Sols durch Ultrafiltration eine Option zu einer weitergehenden Reduzierung des Gehalts des Sols an metallbasierten Verunreinigungen. Geeignete Chelatbildner und/oder Ultrafiltrationsmembranen können z. B. Absatz [0012] und/oder [0016] der JP 2003-089786 A und/oder den Absätzen [0021]-[0023] der JP 2006-036612 A entnommen werden.

Durch Entwässerung kann aus den wässrigen kolloidalen Silikasolen Siliziumdioxid, mit einem Gehalt an
a. Aluminium kleiner gleich 5 ppm, bevorzugt 0,001 bis 4 ppm, besonders bevorzugt 0,05 bis 3 ppm, ganz besonders bevorzugt 0,1 bis 2 ppm,
b. Calcium kleiner gleich 5 ppm, bevorzugt 0,001 bis 4 ppm, besonders bevorzugt 0,1 bis 3 ppm, ganz besonders bevorzugt 0,5 bis 2 ppm,
c. Eisen kleiner gleich 20 ppm, bevorzugt 0,001 bis 20 ppm, besonders bevorzugt 0,1 bis 15 ppm, ganz besonders bevorzugt 0,5 bis 10 ppm,
d. Barium kleiner gleich 5 ppm, bevorzugt 0,001 bis 4 ppm, besonders bevorzugt 0,05 bis 3 ppm, ganz besonders bevorzugt 0,1 bis 2 ppm,
e. Titan kleiner gleich 7 ppm, bevorzugt 0,001 bis 5 ppm, besonders bevorzugt 0,1 bis 3 ppm, ganz besonders bevorzugt 0,5 bis 2 ppm,
f. Zirkonium kleiner gleich 5 ppm, bevorzugt 0,001 bis 3 ppm, besonders bevorzugt 0,05 bis 2 ppm, ganz besonders bevorzugt 0,1 bis 1 ppm,
g. Magnesium kleiner gleich 5 ppm, bevorzugt 0,001 bis 5 ppm, besonders bevorzugt 0,1 bis 4 ppm, ganz besonders bevorzugt 0,5 bis 3 ppm,
h. Phosphor kleiner gleich 5 ppm, bevorzugt 0,001 bis 3 ppm, besonders bevorzugt 0,01 bis 1 ppm, ganz besonders bevorzugt 0,01 bis 0,5 ppm
und die Summe der oben genannten Verunreinigungen kleiner 50 ppm, bevorzugt kleiner 35 ppm, besonders bevorzugt kleiner 25 ppm ist, erhalten werden.

Die Entwässerung kann durch Ultrafiltration oder Verdampfen der wässrigen Lösungsphase und anschließende Trocknung erfolgen. Bei Bedarf können hierbei zusätzliche Waschschritte unter Verwendung einer wässrigen Lösung eines der oben spezifizierten Säuerungsmittel und/oder vollständig entsalztem Wasser als Waschlösung(en) zur weiteren Aufreinigung durchgeführt werden.

Das erhaltene hochreine Siliziumdioxid kann zur Herstellung von elementarem Silizium oder als hochreiner Rohstoff für die Herstellung von hochreinem Quarzglas für Lichtwellenleiter oder Glasgeräten für Labor und Elektronik oder zur Herstellung von Glasrohlingen, beispielsweise sogenannten "boules" oder zur Herstellung von Glasformkörpern, beispielsweise Mantelrohren, sogenannten "overcladding tubes" oder Kernstäben, sogenannten "core rods" oder als "inner cladding material" in Lichtwellenleitern oder zur Herstellung von Kernmaterial in planaren Wellenleitern oder zur Herstellung von Schmelztiegeln, beispielsweise sogenannten "crucibles" oder zur Herstellung von optischen Linsen und Prismen und Photomasken oder zur Herstellung von Beugungsgittern, elektrischen, thermischen und magnetischen Isolatoren oder zur Herstellung von Behältern und Apparaten für die chemische, pharmazeutische und Halbleiterindustrie und Solarindustrie oder zur Herstellung von Glasstäben und Glasrohren oder zur Beschichtung von Metallen, Plastik, Keramik oder Glas oder als Füllstoff in Metallen, Gläsern, Polymeren und Lacken oder als Poliermittel für Halbleitermaterial und elektrische Schaltkreise oder zur Herstellung von Lampen oder als Trägermaterial bei der Herstellung von Solarzellen oder als Trägermaterial für Katalysatoren verwendet werden.

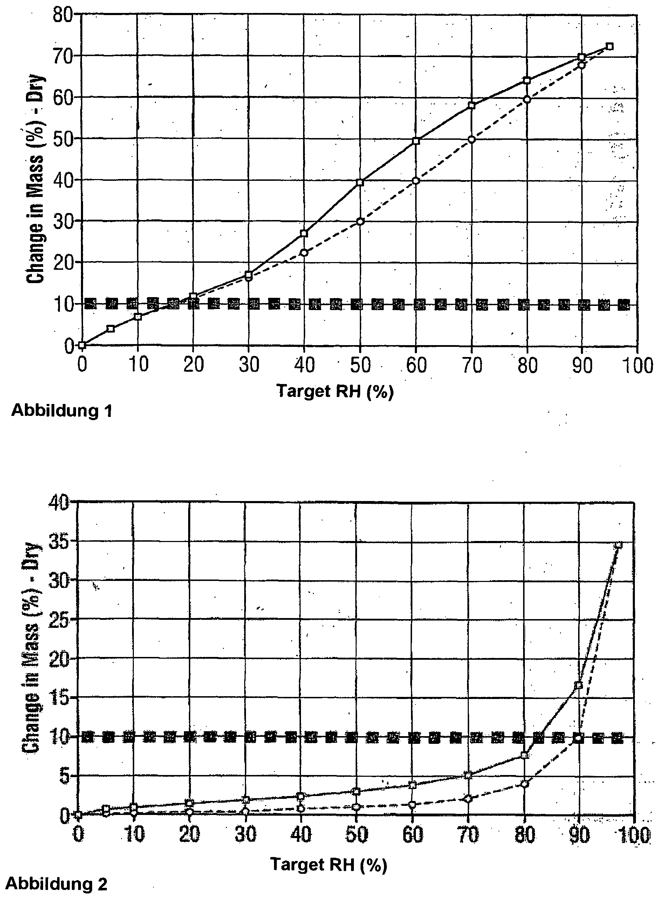

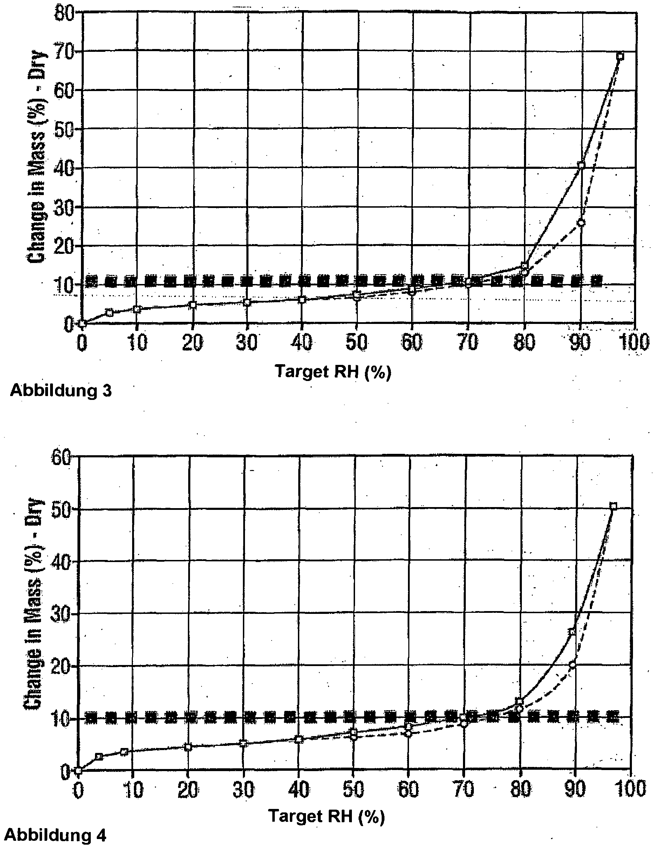

Überraschend war die Feststellung, dass der Wassergehalt des erhaltenen hochreinen Siliziumdioxids auch im Bereich hoher Luftfeuchtigkeiten mit der Umgebungsfeuchte korreliert. Das hochreine Siliziumdioxid ist dazu geeignet, mehr als das 500-fache der üblicherweise von Siliziumdioxid aufnehmbaren Wassermenge aufzunehmen. Mit dieser neuen Eigenschaft heben sich die Produkte von den bisher bekannten Siliziumdioxid-Qualitäten deutlich ab; derartig hohe Wasseraufnahmewerte wurden bisher nur von Zeolithen erreicht. Möglicherweise ist das besonders hohe Wasseraufnahmevermögen, aus dem eine sehr gute Verwendbarkeit als preiswertes Trocknungsmittel resultiert, auf eine neuartige Porenstruktur des hochreinen Siliziumdioxids zurückzuführen; hierfür sprechen insbesondere die untypischen Absorptionsisothermen des erfindungsgemäßen Materials (Abbildung 1) (Markierung Absorptionskurve mittels Kreisen, Markierung Desorptionskurve mittels Vierecken). Der im Unterschied zu herkömmlichem Siliziumdioxid (Abbildung 2: Aerosil^{®} A200, Abbildung 3: Sipernat^{®} 320 DS und Abbildung 4: Ultrasil^{®} VN 3; Markierung Absorptionskurven jeweils mittels Kreisen, Markierung Desorptionskurven jeweils mittels Vierecken) nahezu lineare Verlauf der Absorptionskurve ermöglicht eine effiziente Wasserspeicherung bzw. Wassergewinnung auch unterhalb einer relativen Luftfeuchte von 70%, was bisher nicht möglich war.
Eine geänderte Porenstruktur dürfte auch der Grund für weitere positive Anwendungseigenschaften des hochreinen Siliziumdioxids sein. So eignen sich die Produkte überraschend gut als Trägermaterial für Katalysatoren, insbesondere als Trägermaterial für Hydrierkatalysatoren, und als Isolationsmaterial, insbesondere im Bereich der belüfteten oder geringfügig evakuierten Wärmeisolationssysteme. Weiterhin ergeben sich Verwendungsmöglichkeiten für die Trinkwassergewinnung oder Wasserspeicherung in Trockengebieten, für die Wasserrückgewinnung, insbesondere in Gewächshäusern, für die Feuchteregulierung, insbesondere in geschlossenen (Wohn-)Räumen, und für den Brandschutz, insbesondere in Tunneln. Die adsorptive Beladung des hochreinen Siliziumdioxids mit Wasser, beispielsweise für die Trinkwassergewinnung, erfolgt vorzugsweise zu Zeiten hoher relativer Luftfeuchtigkeit, insbesondere über Nacht, wohingegen die Wasser-Abgabe bevorzugt tagsüber als solare Desorption erfolgt. Die Mineralisierung des aus der Atmosphäre gewonnenen Wassers zu trinkbarem Wasser kann beispielsweise über Sandbettfilter erfolgen; eine Verwendung des Wassers für landwirtschaftliche Zwecke ist selbstverständlich ohne weitere Maßnahmen möglich.
Einer Verkeimung des hochreinen Siliciumdioxides kann bevorzugt entgegengewirkt werden, indem dieses mit Oxiden von Elementen der vierten Nebengruppe des Periodensystems, insbesondere mit Titandioxid, versetzt wird.

Bei der Aufnahme von Wasser durch das hochreine Siliziumdioxid tritt eine starke Temperaturerhöhung ein. Dieser Effekt lässt sich in Verbindung mit der geringen Wärmeleitfähigkeit des Materials in der Weise ausnutzen, dass das Siliziumdioxid als - bevorzugt von der Zuführung thermischer Energie unabhängiges - Wärmespeichermedium verwendet wird.

Die nachfolgenden Beispiele sollen die vorliegende Erfindung näher erläutern.

### Beispiele

### Bestimmung des Gehalts an Verunreinigungen

Methodenbeschreibung zur Bestimmung von Elementspuren in Silika mittels hochauflösender induktiv gekoppelter Plasma-Massenspektrometrie (HR-ICPMS)

Zur spurenanalytischen Untersuchung wurden Proben der wässrigen kolloidalen Silikasole und der wässrigen Kieselsäurelösungen jeweils in einem Quarzbecherglas bis zur Trockne eingedampft.

Jeweils ca. 5 g des aus vorstehend beschriebener Entwässerung erhaltenen festen Probenmaterials wurden in einem gereinigten PFA-Becher eingewogen und die Einwaage auf ± 1 mg genau gravimetrisch erfasst. Nach Zugabe von 1 g Mannit-Lösung (1 Gew.%) zur Stabilisierung von Bor während der Probenbehandlung wurde die jeweilige Probe in 15 mL Reinstwasser und ca. 25-30 g hochreiner Flusssäure (ca. 50 Gew.%) gelöst. Anschließend wurde das Probengefäß mit der Lösung mittels eines Heizblocks auf 120°C erhitzt, um das in der Probe enthaltene Silizium als Hexafluorokieselsäure und auch die überschüssige Flusssäure langsam vollständig abzudampfen. Der hieraus resultierende trockene Rückstand wurde nach dem Abkühlen in 0,5 mL konzentrierter hochreiner Salpetersäure (ca. 65 Gew.%) unter Zugabe von einigen Tropfen hochreiner Wasserstoffperoxid-Lösung (ca. 30 Gew.%) wieder gelöst und danach mit Reinstwasser auf ein Volumen von 10 mL aufgefüllt.

Aliquote dieser Probenlösungen (100 µL, 200 µL, 500 µL, bzw. 1000 µL) wurden in vorgereinigte Polypropylenprobenröhrchen überführt und nach Zugabe von 50 µL Indiumlösung (100 µg/L) als internem Standard mit verdünnter hochreiner Salpetersäurelösung (ca. 3 Gew.%) auf ein Endvolumen von 5 mL aufgefüllt. Die Herstellung von mehreren Verdünnungen diente der internen Qualitätssicherung, um etwaige Fehler bei der Probenvorbereitung bzw. der Messung identifizieren und ausschließen zu können.

Aus Multielementstandards (c = 10 mg/L), in welchen die zu bestimmenden Elemente enthalten sind, wurden durch volumetrische Verdünnung mehrere Kalibrationsstandards mit Konzentrationen von 0,5 µg/L, 1,0 *g/L, 2,0 µg/L, 5 µg/L und 10 µg/L hergestellt. Diesen Kalibrationsstandards wurde ebenfalls, analog zu den Probenlösungen, 50 µL Indiumlösung (100 µg/L) auf 5 mL Endvolumen als interner Standard zugesetzt. Zusätzlich wurden mehrere Blindwertlösungen aus verdünnter Salpetersäure (ca. 3 Gew.%) mit 50 µL Indiumlösung (c = 100 µg/L) auf 5 mL Endvolumen hergestellt.

Die Elementgehalte in den so hergestellten Blindwert-, Kalibrations- und Probenlösungen wurden mittels hochauflösender induktiv gekoppelter Plasma-Massenspektrometrie (HR-ICPMS) unter Verwendung einer linearen externen Kalibration ermittelt. Die ICP-MS Messung erfolgte mit einer Massenauflösung (m/Δm) von mindestens 3500 bzw. von mindestens 10000 für die Elemente Kalium, Arsen und Selen.

### Chemikalien:

### - Wassergläser:

Es wurden zwei verschiedene kommerzielle Wasserglaslösungen der Fa. PQ Corp. (Surrey) und der Fa. Cognis verwendet. Tabelle 1 gibt deren Gewichtsanteile an SiO₂ und Na₂O sowie den Gehalt der Lösungen an relevanten Spurenelementen wieder.

**Tabelle 1: Verwendete Wasserglaslösungen**

| | **Fa. PQ Corp. (Surrey)** | **Fa. Cognis** |
|---|---|---|
| SiO₂ | 28,9 Gew.% | 26,7 Gew.% |
| Na₂O | 8,97 Gew.% | 7,95 Gew.% |

| **Element** | **ppm** | **ppm** |
|---|---|---|
| Al | 89 | 150 |
| B | 0,6 | 1,2 |
| Ba | 0,8 | 5,7 |
| Ca | 12 | 11 |
| Cd | <0,5 | <0,5 |
| Ce | 0,6 | 1,2 |
| Co | <0,5 | <0,5 |
| Cr | <0,5 | 0,7 |
| Cu | <0,5 | <0,5 |
| Fe | 50 | 55 |
| Hg | <0,5 | <0,5 |
| K | 16 | 32 |
| Li | 0,6 | 1,5 |
| Mg | 7,9 | 7,7 |
| Mn | <0,5 | 0,6 |
| Ni | <0,5 | <0,5 |
| P | 4,5 | 3,2 |
| S | 45 | 7,6 |
| Sn | <0,5 | <0,5 |
| Sr | 0,5 | 2,1 |
| Ti | 18,3 | 40 |
| Zn | <0,5 | <0,5 |
| Zr | 31 | 13 |

- konzentrierte Schwefelsäure, puriss. p.a., 95-97 Gew.% (Fa. Sigma-Aldrich, Nr. 30743)
- Wasserstoffperoxid, purum p.a., ≥ 35 Gew.% (Fa. Sigma-Aldrich, Nr. 95299)
- stark saurer Kationenaustauscher LEWATIT^{®} MonoPlus S100 (Fa. LanXess)
- stark basischer Anionenaustauscher LEWATIT^{®} MonoPlus M600 (Fa. LanXess)
- chelatisierender Ionenaustauscher LEWATIT^{®} TP260 (Fa. LanXess)
- chelatisierender Ionenaustauscher Purolite^{®} S957 (Fa. Purolite)

Die Wasserglaslösungen und die konzentrierte Schwefelsäure wurden bei Bedarf mit vollständig entsalztem Wasser verdünnt.

### Beispiel 1.

In einem Becherglas wurden 255 g Schwefelsäure (8,4 Gew.%) und 1,6 g Wasserstoffperoxid (35 Gew.%) vorgelegt und unter Rühren 307 g Wasserglas (SiO₂: 11 Gew.%; PQ) zugetropft, wobei eine klare, gelborange gefärbte Lösung mit einem pH-Wert ≤ 1 erhalten wird. Die erhaltene saure wässrige Alkalimetallsilikatlösung wurde dann über den chelatisierenden Ionenaustauscher LEWATIT^{®} TP260 gegeben. Hierbei änderte sich der pH-Wert nicht bzw. nur marginal. Anschließend wurde die saure wässrige Alkalimetallsilikatlösung über einen zuvor regenerierten Mischbettionenaustauscher (60 Gew.% stark saurer LEWATIT^{®} MonoPlus S100 und 40 Gew.% stark basischer LEWATIT^{®} MonoPlus M600) gegeben. Mit dem Hauptlauf wurde eine wässrige Kieselsäurelösung mit einem pH-Wert im Bereich von 3 bis 5 erhalten. Der Vorlauf und der Nachlauf wurden verworfen.

Die erhaltene wässrige Kieselsäurelösung wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 2 aufgeführt.

**Tabelle 2: Verunreinigungsprofil der wässrigen Kieselsäurelösung bezogen auf den Anteil an gelöstem Festkörper**

| Element | Al | B | Ba | Ca | Ce | Fe | Hf | Mg | Na | P | Ti | Zr |
|---|---|---|---|---|---|---|---|---|---|---|---|---|
| Gehalt / ppm | 1 | 0,24 | 0,03 | 3 | 0,02 | 18 | 0,06 | 0,53 | 4,2 | 0,16 | 0,32 | 0,61 |

### Beispiel 2.

In einem Becherglas wurden 255 g Schwefelsäure (8,4 Gew.%) und 1,6 g Wasserstoffperoxid (35 Gew.%) vorgelegt und unter Rühren 307 g Wasserglas (SiO₂: 11 Gew.%; PQ) zugetropft, wobei eine klare, gelborange gefärbte Lösung mit einem pH-Wert ≤ 1 erhalten wird. Die erhaltene saure wässrige Alkalimetallsilikatlösung wurde dann über den chelatisierenden Ionenaustauscher LEWATIT^{®} TP260 gegeben. Hierbei änderte sich der pH-Wert nicht bzw. nur marginal. Das Eluat wurde in der Folge für 50 min. auf 80°C erhitzt und dann auf Raumtemperatur abgekühlt. Anschließend wurde die saure wässrige Alkalimetallsilikatlösung über einen zuvor regenerierten Mischbettionenaustauscher (50 Gew.% stark saurer LEWATIT^{®} MonoPlus S100 und 50 Gew.% stark-basischer LEWATIT^{®} MonoPlus M600) gegeben. Mit dem Hauptlauf wurde eine wässrige Kieselsäurelösung mit einem pH-Wert im Bereich von 3 bis 5 erhalten. Der Vorlauf und der Nachlauf wurden verworfen.

Die erhaltene wässrige Kieselsäurelösung wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 3 aufgeführt.

**Tabelle 3: Verunreinigungsprofil der wässrigen Kieselsäurelösung bezogen auf den Anteil an gelöstem Festkörper**

| Element | Al | Ba | Ca | Fe | Mg | P | Ti | Zr |
|---|---|---|---|---|---|---|---|---|
| Gehalt / ppm | 0,34 | 0,02 | 1,3 | 7,3 | 0,20 | 2,4 | 0,14 | 1,3 |

### Beispiel 3.

In einem Becherglas wurden 255 g Schwefelsäure (8,4 Gew.%) vorgelegt und unter Rühren 307 g Wasserglas (SiO₂: Gew.%; PQ) zugetropft. Die erhaltene saure wässrige Alkalimetallsilikatlösung mit einem pH-Wert ≤ 1 würde dann über den chelatisierenden Ionenaustauscher LEWATIT^{®} TP260 gegeben. Hierbei änderte sich der pH-Wert nicht bzw. nur marginal.

Die resultierende saure wässrige Alkalimetallsilikatlösung wurde in einem Quarzglas bis zur Trockne eingedampft und anschließen wie beschrieben spurenanalytisch mittels HR-ICPMS untersucht. Die ermittelten, auf den Festkörper bezogenen Gehalte einiger relevanter Elemente sind in Tabelle 4 aufgeführt.

**Tabelle 4: Verunreinigungsprofil der sauren wässrigen Alkalimetallsilikatlösung bezogen auf den Anteil an gelöstem Festkörper,**

| Element | Al | Ba | Fe | Mg | P | Ti | Zr |
|---|---|---|---|---|---|---|---|
| Gehalt / ppm | 0,6 | < 1 | 10 | 0,9 | 5 | 0,4 | 1 |

### Beispiel 4.

In einem Becherglas wurden 255 g Schwefelsäure (8,4 Gew.%) und 1,6 g Wasserstoffperoxid (35 Gew.%) vorgelegt und unter Rühren 307 g Wasserglas (SiO₂: 11 Gew.%; PQ) zugetropft, wobei eine klare, gelborange gefärbte Lösung mit einem pH-Wert ≤ 1 erhalten wird. Diese saure wässrige Alkalimetallsilikatlösung wurde dann über den chelatisierenden Ionenaustauscher LEWATIT^{®} TP260 gegeben. Hierbei änderte sich der pH-Wert nicht bzw. nur marginal. Nach Alterung für 4 Tage bei Raumtemperatur wurde die Lösung über den stark basischen LEWATIT^{®} MonoPlus M600 Ionenaustauscher und dann über den stark sauren LEWATIT^{®} MonoPlus S100 gegeben.

Die resultierende wässrige Kieselsäurelösung mit einem pH-Wert im Bereich von 3 bis 5 wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 5 aufgeführt.

**Tabelle 5: Verunreinigungsprofil der wässrigen Kieselsäurelösung bezogen auf den Anteil an gelöstem Festkörper**

| Element | Al | Ba | Ca | Fe | Mg | Ti | Zr |
|---|---|---|---|---|---|---|---|
| Gehalt / ppm | 0,17 | 0,01 | 1,7 | 6,3 | 0,34 | 0,03 | 0,08 |

### Beispiel 5.

In einem Becherglas wurden 412 g Schwefelsäure (4 Gew.%) und 1,6 g Wasserstoffperoxid (35 Gew.%) vorgelegt und unter Rühren 150 g Wasserglas (SiO₂: 15 Gew.%; Cognis) zugetropft, wobei eine klare, gelborange gefärbte Lösung mit einem pH-Wert ≤ 1 erhalten wird. Diese saure wässrige Alkalimetallsilikatlösung wurde dann über den chelatisierenden Ionenaustauscher Purolite^{®} S957 gegeben. Hierbei änderte sich der pH-Wert nicht bzw. nur marginal.

Die resultierende saure wässrige Alkalimetallsilikatlösung wurde anschließend mit NaOH auf einen pH-Wert von 10 bis 11 eingestellt und dann bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 6 aufgeführt.

**Tabelle 6: Verunreinigungsprofil der alkalischen wässrigen Alkalimetallsilikatlösung bezogen auf den Anteil an gelöstem Festkörper**

| Element | Al | Ba | Fe | Mg | Ti | Zr |
|---|---|---|---|---|---|---|
| Gehalt / ppm | 1 | 1 | 12 | 4 | 0,9 | 1 |

### Beispiel 6.

In einem Becherglas wurden 412 g Schwefelsäure (4 Gew.%) vorgelegt und unter Rühren 150 g Wasserglas (SiO₂: 15 Gew.%; Cognis) zugetropft. Die resultierende saure wässrige Alkalimetallsilikatlösung mit einem pH-Wert ≤ 1 wurde dann über den chelatisierenden Ionenaustauscher Purolite^{®} S957 gegeben. Hierbei änderte sich der pH-Wert nicht bzw. nur marginal.

Die erhaltene saure wässrige Alkalimetallsilikatlösung wurde anschließend mit NaOH auf einen pH-Wert von 10 bis 11 eingestellt und dann bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 7 aufgeführt.

**Tabelle 7: Verunreinigungsprofil der alkalischen wässrigen Alkalimetallsilikatlösung bezogen auf den Anteil an gelöstem Festkörper**

| Element | Al | Ba | Fe | Mg | Ti | Zr |
|---|---|---|---|---|---|---|
| Gehalt / ppm | 5 | 0,5 | 19 | 2 | 6 | 1 |

### Beispiel 7 (Vergleichsbeispiel).

400 g Wasserglas (SiO₂: 26,7 Gew.%; Cognis) wurden mit vollständig entsalztem Wasser auf 5 Gew.% (SiO₂) verdünnt und dann über den stark sauren LEWATIT^{®} MonoPlus S100 Ionenaustauscher gegeben. Die erhaltene saure wässrige Kieselsäurelösung hatte einen pH-Wert von 4. Dann wurde konzentrierte Schwefelsäure zugegeben, bis die Lösung einen pH-Wert von 1 bis 2 hatte. und die Lösung anschließend über den chelatisierenden Ionenaustauscher Purolite^{®} S957, der zuvor mit Schwefelsäure auf einen pH-Wert von 1 bis 2 eingestellt wurde, gegeben.

Die resultierende saure wässrige Kieselsäurelösung wurde anschließend mit NaOH auf einen pH-Wert von 10 bis 11 eingestellt, dann bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 8 aufgeführt.

**Tabelle 8: Verunreinigungsprofil der alkalischen wässrigen Alkalimetallsilikatlösung bezogen auf den Anteil an gelöstem Festkörper**

| Element | Al | Ba | Fe | Mg | Ti | Zr |
|---|---|---|---|---|---|---|
| Gehalt / ppm | 30 | 0,8 | 25 | 3 | 20 | 9 |

### Beispiel 8.

Durch Verdünnung von konzentrierter Schwefelsäure (95-97 Gew.%) mit vollständig entsalztem Wasser wurden 7649 g einer verdünnten wässrigen Schwefelsäurelösung (8,4 Gew.%) hergestellt und dieser Lösung 48 g Wasserstoffperoxid (35 Gew.%) zugesetzt. Die resultierende Lösung wurde dann kontinuierlich mit Wasserglas (Cognis) einer SiO₂-Konzentration von 11 Gew.% mittels eines Cavitron^{®} Reaktionsmischers gemischt. Der Volumenstrom für die Wasserglasdosierung betrug 24,6 L/h und für die Schwefelsäuredosierung 22 L/h. Der Mischer wurde hierbei mit einer Frequenz von 150 Hz betrieben. Die erhaltene saure (pH ≤ 1) wässrige Alkalimetallsilikatlösung, die eine gelborange Färbung aufwies, wurde dann über den chelatisierenden Ionenaustauscher LEWATIT^{®} TP260 gegeben. Hierbei änderte sich der pH-Wert nicht bzw. nur marginal. Anschließend wurde die saure wässrige Alkalimetallsilikatlösung über einen zuvor regenerierten Mischbettionenaustauscher (60 Gew.% stark saurer LEWATIT^{®} MonoPlus S100 und 40 Gew.% stark basischer LEWATIT^{®} MonoPlus M600) gegeben. Mit dem Hauptlauf wurde eine wässrige Kieselsäurelösung mit einem pH-Wert im Bereich von 3 bis 5 erhalten. Der Vorlauf und der Nachlauf wurden verworfen.

Die erhaltene wässrige Kieselsäurelösung wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 9 aufgeführt.

**Tabelle 9: Verunreinigungsprofil der wässrigen Kieselsäurelösung bezogen auf den Anteil an gelöstem Festkörper**

| Element | Al | Ba | Mg | P | Ti | Zr |
|---|---|---|---|---|---|---|
| Gehalt/ppm | 1,5 | 0,23 | 3,1 | 0,04 | 1,3 | 0,67 |

### Beispiel 9.

Durch Verdünnung von konzentrierter Schwefelsäure (95-97 Gew.%) mit vollständig entsalztem Wasser wurden 4685 g einer verdünnten wässrigen Schwefelsäurelösung (10,3 Gew.%) hergestellt und dieser Lösung 32 g Wasserstoffperoxid (35 Gew.%) zugesetzt. Die resultierende Lösung wurde dann kontinuierlich mit Wasserglas (Cognis) einer SiO₂-Konzentratio von 12 Gew.% mittels eines Cavitron^{®} Reaktionsmischers gemischt. Der Volumenstrom für die Wasserglasdosierung betrug 23,1 L/h und für die Schwefelsäuredosierung 17,5 L/h. Der Mischer wurde hierbei mit einer Frequenz von 150 Hz betrieben. Die erhaltene saure (pH ≤ 1) wässrige Alkalimetallsilikatlösung, die eine gelborange Färbung aufwies, wurde dann über den chelatisierenden Ionenaustauscher LEWATIT^{®} TP260 gegeben. Hierbei änderte sich der pH-Wert nicht bzw. nur marginal. Anschließend wurde die saure wässrige Alkalimetallsilikatlösung über einen zuvor regenerierten Mischbettionenaustauscher (50 Gew.% stark saurer LEWATIT^{®} MonoPlus S100 und 50 Gew.% stark basischer LEWATIT^{®} MonoPlus M600) gegeben. Mit dem Hauptlauf wurde eine wässrige Kieselsäurelösung mit einem pH-Wert im Bereich von 3 bis 5 erhalten. Der Vorlauf und der Nachlauf wurden verworfen.

Die erhaltene wässrige Kieselsäurelösung wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 10 aufgeführt.

**Tabelle 10: Verunreinigungsprofil der wässrigen Kieselsäurelösung bezogen auf den Anteil an gelöstem Festkörper**

| Element | Al | Ba | Mg | P | Ti | Zr |
|---|---|---|---|---|---|---|
| Gehalt / ppm | 1,7 | 0,93 | 1,7 | 0,03 | 1,4 | 0,89 |

### Beispiel 10.

Durch Verdünnung von konzentrierter Schwefelsäure (95-97 Gew.%) mit vollständig entsalztem Wasser wurden 7649 g einer verdünnten wässrigen Schwefelsäurelösung (8,4 Gew.%) hergestellt und dieser Lösung 48 g Wasserstoffperoxid (35 Gew.%) zugesetzt. Die resultierende Lösung wurde dann kontinuierlich mit Wasserglas (Cognis) einer SiO₂-Konzentration von 11 Gew.% mittels eines statischen Mischers gemischt. Der Volumenstrom für die Wasserglasdosierung betrug 18,1 L/h und für die Schwefelsäuredosierung 16 L/h. Die erhaltene saure (pH ≤ 1) wässrige Alkalimetallsilikatlösung, die eine gelborange Färbung aufwies, wurde dann über den chelatisierenden Ionenaustauscher LEWATIT^{®} TP260 gegeben. Hierbei änderte sich der pH-Wert nicht bzw. nur marginal. Anschließend wurde die saure wässrige Alkalimetallsilikatlösung über einen zuvor regenerierten Mischbettionenaustauscher (60 Gew.% stark saurer LEWATIT^{®} MonoPlus S100 und 40 Gew.% stark basischer LEWATIT^{®} MonoPlus M600) gegeben. Mit dem Hauptlauf wurde eine wässrige Kieselsäurelösung mit einem pH-Wert im Bereich von 3 bis 5 erhalten. Der Vorlauf und der Nachlauf wurden verworfen.

Die erhaltene wässrige Kieselsäurelösung wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 11 aufgeführt.

**Tabelle 11: Verunreinigungsprofil der wässrigen Kieselsäurelösung bezogen auf den Anteil an gelöstem Festkörper**

| Element | Al | Ba | Mg | P | Ti | Zr |
|---|---|---|---|---|---|---|
| Gehalt / ppm | 2,1 | 1,7 | 1,3 | 0,42 | 1,5 | 0,56 |

### Beispiel 11.

Eine verdünnte Schwefelsäure-Lösung (8,4 Gew.%) wurde kontinuierlich mittels eines statischen Mischers mit einer Wasserglas-Lösung (Cognis) mit einer SiO₂-Konzentration von 11 Gew.% gemischt wobei der Volumenstrom für die Wasserglasdosierung 18,1 L/h und für die Schwefelsäuredosierung 16 L/h betrug. Die erhaltene saure (pH ≤ 1) wässrige Alkalimetallsilikatlösung, die klar und farblos war, wurde dann über den chelatisierenden Ionenaustauscher LEWATIT^{®} TP260 gegeben. Hierbei änderte sich der pH-Wert nicht bzw. nur marginal. Anschließend wurde die saure wässrige Alkalimetallsilikatlösung über einen zuvor regenerierten Mischbettionenaustauscher (50 Gew.% stark saurer LEWATIT^{®} MonoPlus S100 und 50 Gew.% stark basischer LEWATIT^{®} MonoPlus M600) gegeben. Mit dem Hauptlauf wurde eine wässrige Kieselsäurelösung mit einem pH-Wert im Bereich von 3 bis 5 erhalten. Der Vorlauf und der Nachlauf wurden verworfen.

Die erhaltene wässrige Kieselsäurelösung wurde in einem Quarzglas bis zur Trockne eingedampft und anschließend wie beschrieben spurenanalytisch mittels HR-ICPMS untersucht. Die ermittelten, auf den Festkörper bezogenen Gehalte einiger relevanter Elemente sind in Tabelle 12 aufgeführt.

**Tabelle 12: Verunreinigungsprofil der wässrigen Kieselsäurelösung- bezogen auf den Anteil an gelöstem Festkörper**

| Element | Al | Ba | Mg | P | Ti | Zr |
|---|---|---|---|---|---|---|
| Gehalt / ppm | 1,8 | 1,7 | 3,6 | 0,14 | 2,4 | 0,58 |

### Beispiele 12-18.

Die aus den Beispielen 1,2 und 4 sowie 8-11 erhaltenen hochreinen wässrigen Kieselsäurelösungen wurden jeweils durch Zugabe wässriger Kaliumhydroxidlösung auf einen pH-Wert im Bereich von 8 bis 10,5 eingestellt und auf 90°C erhitzt. Bei dieser Temperatur wurden dann weitere hochreine wässrige Kieselsäurelösung und Kaliumhydroxidlösung in einem konstanten Stoffmengenverhältnis, welches die Aufrechterhaltung eines pH-Wertes im Bereich von 8 bis 10,5 ermöglicht, zugeführt. Die gebildeten kolloidalen Silikasole wurden anschließend mittels Ultrafiltration aufkonzentriert.

Die Spurenanalyse mittels HR-ICP.MS nach Eindampfen zur Trockne in einem Quarzglas ergab, dass die resultierenden kolloidalen Silikasole Verunreinigungsprofile aufwiesen, welche im Rahmen der experimentellen Messsicherheit denen der zugrunde liegenden hochreinen wässrigen Kieselsäurelösung (Tabelle 2,3,5,9-12) entsprachen. Diese wässrigen kolloidalen Silikasole sind dementsprechend sehr gut für CMP Anwendungen geeignet.

## Patentansprüche

1. Verfahren zur Herstellung eines wässrigen kolloidalen Silikasols umfassend die nachfolgenden Schritte
a. Herstellung einer wässrigen Lösung eines wasserlöslichen Alkalimetallsilikats mit einem pH-Wert von kleiner 2 durch Mischen eines wasserlöslichen Alkalimetallsilikats oder einer wässrigen Alkalimetallsilikatlösung mit einem Säuerungsmittel
a1. In Kontakt Bringen der gemäss Verfahrensschritt a) erhaltenen sauren Alkalimetallsilikatlösung mit einem Harz welches chelatbildende funktionelle Gruppen mit Bindungsaffinität zu zwei- oder höherwertigen Metallionen enthält, wobei die chelatbildenden funktionellen Gruppen Phosphonsäure- und/oder substituierte oder unsubstituierte Aminophosphonsäuregruppen und/oder Sulfonsäuregruppen und/oder Carboxylgruppen enthalten
b. In Kontakt Bringen der gemäss Verfahrensschritt a1) erhaltenen sauren Alkalimetallsilikatlösung mit einem basischen Anionenaustauscherharz vom Hydroxyl-Typ und einem sauren Kationenaustauscherharz vom Wasserstoff-Typ in beliebiger Reihenfolge wobei das Anionenaustauscherharz und das Kationenaustauscherharz räumlich getrennt oder durchmengt eingesetzt werden
c. Bildung eines stabilen kolloidalen Silikasols durch Einstellen einer/eines zur Keimbildung und Partikelwachstum geeigneten Temperatur, Konzentration und pH-Wertes der aus Schritt b) erhaltenen wässrigen Kieselsäurelösung.

2. Verfahren zur Herstellung eines wässrigen kolloidalen Silikasols gemäss Anspruch 1, **dadurch gekennzeichnet, dass** das Säuerungsmittel in Schritt a) vorgelegt wird und das wasserlösliche Alkalimetallsilikat oder die wässrige Alkalimetallsilikatlösung zugegeben wird.

3. Verfahren zur Herstellung eines wässrigen kolloidalen Silikasols gemäss einem der vorherigen Ansprüche, **dadurch gekennzeichnet, dass** das Mischen in Schritt a) mittels eines statischen oder dynamischen Mischers erfolgt.

4. Verfahren zur Herstellung eines wässrigen kolloidalen Silikasols gemäss einem der Ansprüche 1 bis 3, worin das wasserlösliche Alkalimetallsilikat ein Natriumwasserglas oder Kaliwasserglas mit einem Molverhältnis von SiO₂/A₂O (A: Na oder K) von 4,5 bis 1,5 ist.

5. Verfahren zur Herstellung eines wässrigen kolloidalen Silikasols gemäss einem der Ansprüche 1 bis 4, worin das wasserlösliche Alkalimetallsilikat in der nach Verfahrensschritt a) erhaltenen Lösung in einer Konzentration von 1 bis 8 Gew.% SiO₂-Gehalt gelöst ist.

6. Verfahren zur Herstellung eines wässrigen kolloidalen Silikasols gemäss einem der Ansprüche 1 bis 5, **dadurch gekennzeichnet, dass** es sich bei dem Säuerungsmittel um Salzsäure, Phosphorsäure, Salpetersäure, Schwefelsäure, Chlorsulfonsäure, Sulfurylchlorid oder Perchlorsäure oder um Gemische der vorgenannten Säuren handelt.

7. Verfahren zur Herstellung eines wässrigen kolloidalen Silikasole gemäss einem der Ansprüche 1 bis 6, **dadurch gekennzeichnet, dass** die saure wässrige Lösung eines wasserlöslichen Alkalimetallsilikats Wasserstoffperoxid umfasst.

8. Verfahren zur Herstellung eines wässrigen kolloidalen Silikasols gemäss einem der Ansprüche 1 bis 7, **dadurch gekennzeichnet, dass** die nach Schritt b) erhaltene wässrige Kieselsäurelösung einen pH-Wert von 1 bis 5 aufweist.

## Claims

1. Process for preparing an aqueous colloidal silica sol, comprising the following steps
a. preparing an aqueous solution of a water-soluble alkali metal silicate with a pH of less than 2 by mixing a water-soluble alkali metal silicate or an aqueous alkali metal silicate solution with an acidifier
a1. contacting the acidic alkali metal silicate solution obtained in process step a) with a resin containing chelate-forming functional groups with binding affinity for divalent or higher-valency metal ions, the chelate-forming functional groups containing phosphonic acid groups and/or substituted or unsubstituted amino phosphonic acid groups and/or sulphonic acid groups and/or carboxyl groups
b. contacting the acidic alkali metal silicate solution obtained in process step a1) with a basic anion exchange resin of the hydroxyl type and an acidic cation exchange resin of the hydrogen type in any sequence, the anion exchange resin and the cation exchange resin being used in spatial separation or in a mixture
c. forming a stable colloidal silica sol by establishing a temperature, concentration and pH suitable for nucleation and particle growth in the aqueous silica solution obtained from step b).

2. Process for preparing an aqueous colloidal silica sol according to Claim 1, **characterized in that** the acidifier is initially charged in step a) and the water-soluble alkali metal silicate or the aqueous alkali metal silicate solution is added.

3. Process for preparing an aqueous colloidal silica sol according to any of the preceding claims, **characterized in that** the mixing in step a) is effected by means of a static or dynamic mixer.

4. Process for preparing an aqueous colloidal silica sol according to any of Claims 1 to 3, in which the water-soluble alkali metal silicate is a sodium waterglass or potassium waterglass with a molar ratio of SiO_{2/}A₂O (A: Na or K) of 4.5 to 1.5.

5. Process for preparing an aqueous colloidal silica sol according to any of Claims 1 to 4, in which the water-soluble alkali metal silicate is dissolved in the solution obtained after process step a) in a concentration of 1 to 8% by weight of SiO₂ content.

6. Process for preparing an aqueous colloidal silica sol according to any of Claims 1 to 5, **characterized in that** the acidifier is hydrochloric acid, phosphoric acid, nitric acid, sulphuric acid, chlorosulphonic acid, sulphuryl chloride or perchloric acid, or mixtures of the aforementioned acids.

7. Process for preparing an aqueous colloidal silica sol according to any of Claims 1 to 6, **characterized in that** the acidic aqueous solution of a water-soluble alkali metal silicate comprises hydrogen peroxide.

8. Process for preparing an aqueous colloidal silica sol according to any of Claims 1 to 7, **characterized in that** the aqueous silica solution obtained after step b) has a pH of 1 to 5.

## Revendications

1. Procédé pour la préparation d'un sol aqueux, colloïdal de silice, comprenant les étapes suivantes :
a. préparation d'une solution aqueuse d'un silicate de métal alcalin soluble dans l'eau présentant un pH inférieur à 2 par mélange d'un silicate de métal alcalin soluble dans l'eau ou d'une solution aqueuse de silicate de métal alcalin avec un acidifiant
a1. mise en contact de la solution acide de silicate de métal alcalin obtenue selon l'étape de procédé a) avec une résine qui contient des groupes fonctionnels formant des chélates, présentant une affinité de liaison pour des ions métalliques divalents ou de valence supérieure, les groupes fonctionnels formant des chélates contenant des groupes acide phosphonique et/ou des groupes acide aminophosphonique substitués ou non substitués et/ou des groupes acide sulfonique et/ou des groupes carboxyle
b. mise en contact de la solution acide de silicate de métal alcalin obtenue selon l'étape de procédé a1) avec une résine échangeuse anionique basique de type hydroxyle et avec une résine échangeuse cationique acide de type hydrogène dans un ordre quelconque, la résine échangeuse anionique et la résine échangeuse cationique étant utilisées de manière séparée dans l'espace ou de manière mélangée
c. formation d'un sol colloïdal, stable, de silice par réglage d'une température, d'une concentration et d'un pH appropriés pour la formation de germes et la croissance de particules de la solution de silice aqueuse obtenue de l'étape b).

2. Procédé pour la préparation d'un sol colloïdal, aqueux, de silice selon la revendication 1, **caractérisé en ce que** l'acidifiant dans l'étape a) est disposé au préalable et le silicate de métal alcalin soluble dans l'eau ou la solution aqueuse de silicate de métal alcalin est ajouté(e).

3. Procédé pour la préparation d'un sol colloïdal, aqueux, de silice selon l'une quelconque des revendications précédentes, **caractérisé en ce que** le mélange dans l'étape a) a lieu au moyen d'un mélangeur statique ou dynamique.

4. Procédé pour la préparation d'un sol colloïdal, aqueux, de silice selon l'une quelconque des revendications 1 à 3, dans lequel le silicate de métal alcalin soluble dans l'eau est un verre soluble sodique ou un verre soluble potassique présentant un rapport molaire de SiO₂/A₂O (A : Na ou K) de 4,5 à 1,5.

5. Procédé pour la préparation d'un sol colloïdal, aqueux, de silice selon l'une quelconque des revendications 1 à 4, dans lequel le silicate de métal alcalin soluble dans l'eau est dissous dans la solution obtenue après l'étape de procédé a) en une concentration de 1 à 8% en poids de SiO₂.

6. Procédé pour la préparation d'un sol colloïdal, aqueux, de silice selon l'une quelconque des revendications 1 à 5, **caractérisé en ce qu'**il s'agit, pour l'acidifiant, d'acide chlorhydrique, d'acide phosphorique, l'acide nitrique, d'acide sulfurique, d'acide chlorosulfonique, de chlorure de sulfuryle ou d'acide perchlorique ou de mélanges des acides susmentionnés.

7. Procédé pour la préparation d'un sol colloïdal, aqueux, de silice selon l'une quelconque des revendications 1 à 6, **caractérisé en ce que** la solution aqueuse, acide, d'un silicate de métal alcalin soluble dans l'eau comprend du peroxyde d'hydrogène.

8. Procédé pour la préparation d'un sol colloïdal, aqueux, de silice selon l'une quelconque des revendications 1 à 7, **caractérisé en ce que** la solution aqueuse de silice obtenue après l'étape b) présente un pH de 1 à 5.
